# EUROPEAN PATENT APPLICATION

(11) **EP 2 436 286 A2**
(43) Date of publication of application: **04.04.2012**
(21) Application number: 11191406.5
(22) Date of filing: 12.05.2008
(51) Int. Cl.: A47J 27/21, A47J 31/40

(54) **Liquid heating vessels**

(30) Priority: 11.05.2007 GB 0709164
(62) Divisional of application: 08750567.3
(71) Applicant: Otter Controls Limited, Buxton Derbyshire SK17 7LF (GB)
(72) Inventor: Gaeta, Antonio, Buxton, Derbyshire SK17 6RA (GB); Wright, Peter, Leek, Staffordshire ST13 6LN (GB); Hadfield, Robert, STOCKPORT, Cheshire SK6 6DF (GB); Smith, David Andrew, Macclesfield, Cheshire SK10 2UU (GB); Middleton, Stephen, Chesterfield, Cheshire S41 0TD (GB)
(74) Representative: Cross, James Peter Archibald

(57) **Abstract**

A liquid heating vessel (1) comprises a liquid reservoir (5) having a liquid inlet (21); a heating chamber (4) for receiving liquid from the reservoir (5) and for heating the liquid; and an outlet (7) for dispensing the liquid from the heating chamber (4) when the vessel is tilted towards the outlet (7); wherein the liquid inlet (21) is open and arranged substantially to prevent escape of liquid from the reservoir (5) when liquid is dispensed through the outlet (7).

## Description

### Field of the Invention

The present invention relates to liquid heating vessels, and particularly but not exclusively to electric water heating vessels such as kettles and the like.

### Background to the Invention

Electric water heating vessels, such as kettles and the like, generally have high power ratings (e.g. in the range 2-3 kW) and are used on a daily basis in the domestic environment. As such, they are responsible for a significant fraction of domestic energy consumption. It is becoming ever more important to save energy, so as to reduce demand on scarce energy resources and to protect the environment. Moreover, the environmental impact of electric water heating vessels goes beyond their energy consumption; other considerations include the energy required to manufacture and transport the vessel, the raw materials needed for the vessel, and the amount of water wasted when using the kettle. Moreover, it would be desirable to convert existing vessels to reduce their environmental impact, rather than requiring users to replace an existing vessel with a more environmentally friendly one, which incurs the environmental cost of manufacturing a complete new vessel.

One problem is that users often heat more water than they need, so that a significant amount of energy is wasted heating water that is never used, or at least is allowed to cool so that it must be reheated before it is used.

One solution to this problem would be to encourage users to measure the quantity of water required before it is heated, for example by filling a teapot with cold water and then filling the kettle with water from the teapot. However, most users are reluctant to perform additional operations unless some means is provided to facilitate them.

Another solution is proposed in patent publication WO-A1-01/93733, in which a kettle has chamber for heating water and a reservoir located within the chamber and having a user-operable valve for releasing water into the chamber. However, this merely replicates the problem within the kettle itself; the user must still judge how much water is to be heated, and fill the chamber to the appropriate level from the reservoir. Also, the reservoir takes up space within the kettle, thereby reducing the water heating capacity for a given overall size of kettle. Another problem with this proposal is the difficulty in accessing the reservoir for cleaning and/or descaling. Another problem is that a seal is required to seal the reservoir after filling, to prevent water from spilling out. Another problem is that the reservoir is immersed within the heating chamber, so that heat is wasted in heating up the reservoir by thermal transfer.

Another problem is that, where more water is heated than is needed immediately and some remains in the kettle, the user tends to reheat the remaining water when it is needed subsequently, to ensure that it is hot enough. However, the water may already be hot enough for some purposes, such as making coffee, so energy is wasted heating water that does not need reheating.

Another problem is that thermal transfer between the heating element and the liquid to be heated may not be efficient. In conventional immersed element kettles, thermal transfer is relatively efficient because the element is substantially surrounded by liquid. In conventional 'under floor' element kettles, the heating element is arranged on the underside of the reservoir floor of the kettle and heat may be lost to the surroundings.

### Statement of the Invention

According to one aspect of the present invention, there is provided a liquid heating vessel having a liquid reservoir that dispenses liquid into the heating part of the vessel in one or more metered quantities, so that the user can easily control how much water is heated.

In one embodiment, there is a dispensing compartment between the reservoir and the heating part, with a valve arrangement that can be switched from filling the dispensing compartment from the reservoir to dispensing the contents of the compartment into the heating part.

In another embodiment, the reservoir itself is divided into compartments, and the user can dispense the contents of one or more compartments.

In another aspect of the invention, there is provided a liquid heating vessel having a liquid reservoir that dispenses liquid into the heating part of the vessel until the liquid level in the heating part reaches a predetermined level. The predetermined level may be adjustable by the user, so that the vessel can be set to heat a predetermined quantity of liquid. This aspect also allows greater control over the amount of liquid to be heated.

In another aspect of the invention, there is provided a liquid heating vessel having a liquid reservoir that dispenses liquid into the heating part of the vessel; the boundary between the reservoir and the heating part is moveable, for example to increase the volume available to the heating part as the amount of liquid in the reservoir reduces and the amount in the heating part increases. This allows efficient use of space within the vessel.

In an alternative, the boundary between the reservoir and the heating part may be removed or opened when the reservoir is empty, to allow the space occupied by the reservoir to be used as part of the heating part.

In another aspect of the invention, there is provided a liquid heating vessel having a liquid reservoir that dispenses liquid into the heating part of the vessel, wherein the volume of the heating part is significantly greater than that of the reservoir. The reservoir may be formed in the lid of the vessel and may be permanently open.

In another aspect of the invention, there is provided a liquid heating vessel having a liquid reservoir that dispenses liquid into the heating part of the vessel, which includes means for indicating when the liquid level reaches a predetermined threshold. The threshold may be adjustable by the user.

In another aspect of the invention there is provided a liquid heating vessel including a temperature indicator for indicating to the user whether liquid contained therein is above a predetermined temperature as said liquid cools. This allows the user to judge whether the liquid need be reheated. The predetermined temperature may be adjustable by the user. In another aspect of the invention there is provided a liquid heating vessel arranged to heat liquid to a first predetermined temperature and to inhibit reheating of the liquid when above a second temperature substantially lower than the first. This prevents the user from reheating the liquid unnecessarily.

In another aspect of the invention, there is provided a liquid heating vessel having a reservoir that is tilted so as to dispense liquid into a heating chamber of the vessel. In one embodiment, the reservoir is substantially fixed relative to the vessel so that liquid may be dispensed from the reservoir by tilting the vessel. This provides a particularly simple and convenient means for dispensing. In another embodiment, the reservoir pivots about a substantially horizontal axis relative to the vessel, so as to dispense the liquid. The reservoir may overbalance when a sufficient weight of liquid is contained therein, or the pivoting may be actuated by the user.

According to another aspect of the invention, there is provided a liquid heating vessel with a reservoir having an open inlet arranged so that liquid does not spill from the reservoir when the vessel is tipped forward to dispense liquid from an outlet of a heating chamber of the vessel. The inlet may be displaced towards a handle of the vessel, or may comprise a passage leading from the outlet side of the kettle to the handle side of the vessel, so that the reservoir can be filled from the outlet side but water does not spill from the inlet. These arrangements facilitate filling of the vessel without requiring a seal to prevent spillage from the vessel.

The reservoir may be removable from the vessel, and may be retrofitted to an existing vessel. Hence, aspects of the invention extend to the reservoir as a discrete part from the vessel.

According to another aspect of the invention, there is provided a liquid heating vessel having an inlet and a flow meter arranged to measure the volume of liquid entering the vessel. This allows the required volume to be judged without a level indicator.

According to another aspect of the invention, there is provided a liquid heating vessel with a heating chamber of variable capacity. This may be achieved by a movable partition within the heating chamber, or an object that occupies space within the heating chamber, or by varying the volume of the heating chamber as a whole. This avoids heating of excess liquid, and may facilitate accurate judgement of liquid volume during filling.

According to another aspect of the invention, there is provided a liquid heating vessel having a rotatable level indicator; preferably, the level indicator is self-levelling, to allow the liquid level to be judged more accurately when the vessel is tilted, for example during filling.

According to another aspect of the invention, there is provided a liquid heating vessel having a slidable level indicator, which allows the user to set the desired level. According to another aspect of the invention, there is provided a liquid heating vessel having a receptacle stored on or in the outer surface of the vessel, wherein the receptacle can be filled and used to dispense liquid into the vessel. This provides a convenient measure for filling the vessel, which is stored on the outside of the vessel for easy access.

### Brief Description of the Drawings

Embodiments of the invention will now be described with reference to the drawings identified below.
Figure 1 is a perspective view of a kettle in a first embodiment of the invention.
Figure 1a is a perspective cut-away view of the kettle of the first embodiment in a configuration for filling a reservoir
Figure 1b is a perspective cut-away view of the kettle of the first embodiment in a configuration for dispensing a metered quantity of water into a heating chamber.
Figure 1c is a perspective cut-away view of the kettle of the first embodiment in a configuration for filling the heating chamber directly from the reservoir.
Figure 2 is a perspective view of a kettle in a second embodiment of the invention.
Figure 2a is a perspective view of the kettle of the second embodiment in a filling configuration.
Figure 2b is a perspective view similar to that of Figure 2a, but with the lid removed.
Figure 2c is a perspective cut-away view of the kettle of the second embodiment, illustrating dispensing of metered quantities of water into a heating chamber.
Figure 3 is a perspective view of a kettle in a third embodiment of the invention.
Figure 3a is a perspective cut-away view of the kettle of the third embodiment in a filling configuration.
Figure 3b is a perspective cut-away view of the kettle of the third embodiment in a configuration for dispensing water into a heating chamber.
Figure 4 is a perspective view of a kettle in a fourth embodiment of the invention.
Figure 4a is a perspective cut-away view of the kettle of the fourth embodiment, illustrating dispensing water into a heating chamber.
Figure 5 is a perspective view of a kettle in a fifth embodiment of the invention.
Figure 5a is a cut-away perspective view of the kettle of the fifth embodiment with an actuator in a lowered position.
Figure 5b is a cut-away perspective view of the kettle of the fifth embodiment with the actuator in a raised position.
Figure 5c is a detailed cut-away perspective view of a float valve within the actuator in a closed configuration.
Figure 5d is a detailed cut-away perspective view of the float valve within the actuator in an open configuration.
Figure 6a is a cut-away perspective view of a kettle in a sixth embodiment of the invention, with a full reservoir.
Figure 6b is a cut-away perspective view of the kettle of the sixth embodiment, with an empty reservoir.
Figure 7a is a cut-away perspective view of a kettle in a seventh embodiment of the invention, with a full reservoir.
Figure 7b is a cut-away perspective view of the kettle of the seventh embodiment, with an empty reservoir.
Figure 7c is a cut-away perspective view of the kettle in a variant of the seventh embodiment.
Figure 8a is a cut-away perspective view of a kettle in an eighth embodiment of the invention, in a filling configuration.
Figure 8b is a cut-away perspective view of a kettle in the eighth embodiment, in a configuration for dispensing water from a reservoir into a heating chamber.
Figure 8c is a cut-away perspective view of a kettle in the eighth embodiment of the invention, in which the reservoir is empty.
Figures 9a to 9c are diagrams illustrating a variant of the embodiments in which a reservoir is provided as a removable insert for a kettle.
Figure 10 is a cutaway perspective view illustrating a filling arrangement for a kettle.
Figures 11a and 11b are cutaway perspective views illustrating the application of the filling arrangement in a first variant of the third embodiment, with a valve respectively in closed and open positions.
Figures 12a and 12b are cutaway perspective views illustrating the application of the filling arrangement in a second variant of the third embodiment, with a valve respectively in closed and open positions.
Figure 13 is a cutaway perspective view illustrating the application of the filling arrangement to a variant of the fourth embodiment.
Figure 14a is a schematic view of a kettle in a ninth embodiment of the invention, while
Figure 14b shows a meter in the ninth embodiment.
Figures 15a and 15b are schematic views of a vessel respectively tipped forward and upright, including a rotating level indicator.
Figure 16 is a schematic view of a vessel having a level indicator applied thereto.
Figure 17 is a schematic view of a sliding level indicator.
Figure 18a is a schematic diagram of a kettle in a tenth embodiment, while Figure 18b is a diagram of a gearing mechanism in the tenth embodiment.
Figure 19 is a schematic diagram of a kettle in an eleventh embodiment.
Figures 20a and 20b are schematic diagrams of kettles with different inserts, in a twelfth embodiment.
Figure 21 is a schematic diagram of a kettle in a thirteenth embodiment.
Figures 22a and 22b are schematic diagrams of a kettle in a fourteenth embodiment, in filling and upright positions respectively.
Figures 23a and 23b are schematic diagrams of a kettle in a fifteenth embodiment, in perspective and elevation views respectively.
Figures 24a and 24b are schematic diagrams of a kettle in a sixteenth embodiment, with a reservoir in filling and dispensing positions respectively.
Figure 25 is a schematic perspective view of a kettle in a seventeenth embodiment.
Figure 26 is a schematic perspective view of a kettle in an eighteenth embodiment.
Figure 27a is a schematic perspective view of a kettle in a nineteenth embodiment, while Figures 27b and 27c are schematic diagrams illustrating the principle by which liquid is respectively stored and dispensed from a reservoir in the nineteenth embodiment.
Figures 28a and 28b are schematic diagrams of a kettle in a twentieth embodiment, with a reservoir being removed from a stored position, and in dispensing position respectively.
Figure 29 is a schematic perspective view of a kettle in a twenty-first embodiment, showing a reservoir both in stored and detached positions.
Figures 30a and 30b are respectively schematic perspective and top views of a kettle in a twenty-second embodiment.
Figure 31 is a schematic perspective view of a kettle in a twenty-second embodiment.

### Detailed Description of Embodiments

Each of the embodiments involves, by way of example, a kettle 1 having a base 2 and a body 3; the base contains an electric heater and an associated connector and control (not shown) for supplying and controlling electrical power to the heater. The body 3 is for containing liquid such as water and may be divided into a heating chamber 4 for heating liquid contained therein and a reservoir 5 for containing water to be dispensed into the heating chamber 4, which may be under the control of a user-operable actuator 6. The reservoir 5 may be located above the heating chamber 4, to avoid immersion of the reservoir 5 in heated liquid.

Preferably, at least part of the body 3 is transparent or translucent, such that the user may observe the quantity of water in the heating chamber 4 and/or the reservoir 5.

Preferably, the electric heater is arranged on the underside of a heating element plate in the base of the heating chamber 4, but the electric heater may alternatively be immersed within the heating chamber.

The base 2 may be a corded base, which has an electrical power cord connected directly thereto, or may be a cordless base removably connectable to a power base by means of cordless connectors, most preferably by 360° cordless connectors such as CS4 and CP7 connectors as supplied by Otter Controls Ltd and/or as described in patent publication WO 94/06185.

Water is dispensed out of the kettle 1 from the heating chamber 4, for example through a spout 7. Preferably, the kettle 1 is arranged so that water cannot be dispensed out of the kettle from the reservoir 5. This may be achieved either by closing the reservoir 5 after a filling operation, or more simply by arranging a filling aperture for the reservoir 5 such that water cannot escape through the filling aperture while water is poured from the heating chamber 4; this may be achieved for example by disposing the filling aperture towards the handle 8 and away from the spout 7 of the kettle. Alternatively, the filling aperture may be disposed towards the spout 7 of the kettle, but a passage may be provided from the filling aperture to the reservoir 5, the passage extending towards the handle 8 and away from the spout 7 so that water is prevented from escaping through the passage during pouring. Alternatively, a flap or valve may be provided in or around the filling aperture, arranged to allow water in through the filling aperture but to prevent water from escaping through the filling aperture. Filling arrangements will be discussed in more detail in the *Filling Arrangements* section below.

### First Embodiment

In the first embodiment, the kettle body 3 includes a dispensing compartment 11 disposed between the reservoir 5 and the heating chamber 4. In the figures, the dispensing compartment 11 is shown below the reservoir 5 but it may alternatively be disposed within or to one side of the reservoir 5.

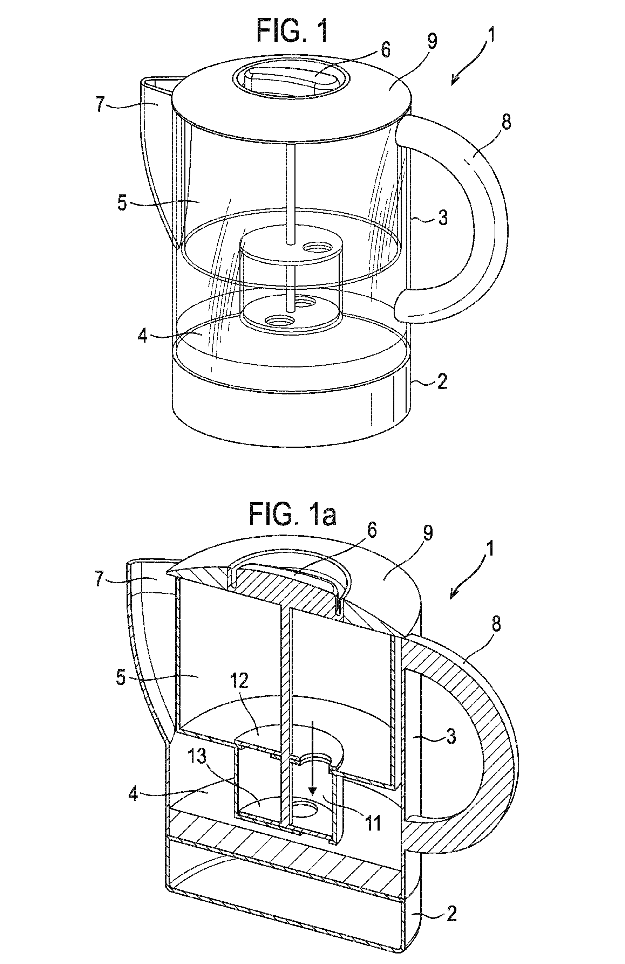

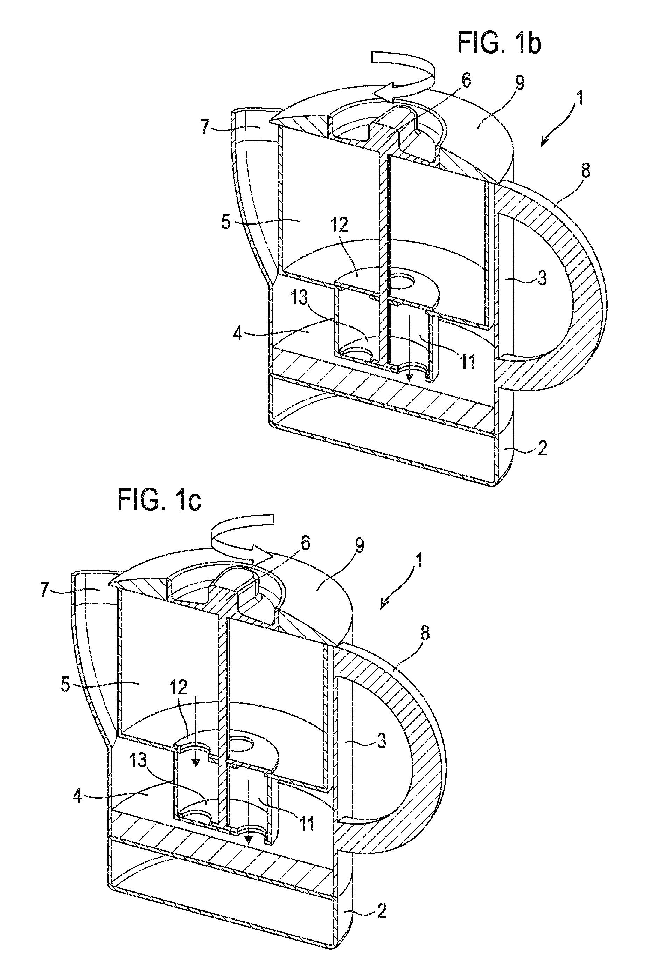

The actuator 6 is movable to a first position, as shown in Figure 1a, in which water entering the reservoir 5 also flows into the dispensing compartment 11, which is closed to the heating chamber. When the actuator 6 is moved from the first position to the second position, as shown in Figure 1b, the dispensing compartment 11 is closed to the reservoir 5 and opened to the heating chamber 4, such that a quantity of water defined by the capacity of the dispensing compartment 11 is dispensed into the heating chamber 4. In other words, a metered or predetermined quantity of water is dispensed from the reservoir 5 to the heating chamber 4.

Should the user require multiple quantities of water to be dispensed from the reservoir 5 to the heating chamber 4, the user may repeatedly move the actuator from the first position to the second position and back, pausing to allow the dispensing chamber respectively to fill and empty. For example, the capacity of the dispensing compartment 11 may be one standard cup. If the user wants to boil three cups of water, he or she may move the actuator from the first position to the second position and back three times.

The actuator 6 may also be moveable to a third position shown in Figure 1c, in which the dispensing compartment 11 is simultaneously open to the reservoir 5 and to the heating chamber 4. Hence, water entering the reservoir 5 flows through the dispensing compartment 11 into the heating chamber 4. When the desired quantity of water has entered the heating chamber 4, the user may move the actuator 6 to the first position, to prevent more water from entering the heating chamber. Alternatively, the user may move the actuator 6 to the second position, in which case the water contained within the dispensing compartment 11 may flow into the heating chamber 4, but no more water will flow in from the reservoir 5.

The actuator 6 may be biased to return to the first position when released by the user, to facilitate filling of the reservoir 5.

One specific mechanism for achieving the above is illustrated in Figures 1a to 1c. The actuator 6 is rotatably mounted and includes a first sealing plate 12 located between the reservoir 5 and the dispensing compartment 11, and a second sealing plate 13 located between the dispensing compartment 11 and the heating chamber 4. The reservoir 5 includes apertures to the dispensing compartment 11 at least one of which registers with apertures in the first sealing plate 12 when rotated to the first and third positions, such that water flows through the apertures into the dispensing compartment 11.The dispensing compartment 11 includes an aperture to the heating chamber 4 that registers with one of a plurality of apertures in the second sealing plate when rotated to the second and third positions, such that water flows through the apertures into the heating chamber 4.

In an alternative to the first embodiment, there may be a first valve between the reservoir 5 and the dispensing compartment 11, and a second valve between the dispensing compartment 11 and the heating chamber 4. The first and second valves are linked such that the first valve is open when the second valve is closed and *vice versa*. The first and second valves are actuable by the actuator 6, which may comprise a rod connected to the first and second valves. Depressing the actuator 6 causes the first valve to close and the second valve to open, thus dispensing water from the dispensing compartment. The actuator 6 is biased to return to its undepressed state when released, thus closing the second valve, opening the first valve and allowing the dispensing compartment to be refilled from the reservoir 5.

Alternatively, the actuator 6 and connected valves may be operated by a sliding mechanism.

It will be understood that alternative mechanisms to the above may achieve the same effect and fall within the scope of the first embodiment of the invention.

The reservoir 5 may be filled by any suitable means, such as through an aperture in the lid of the kettle 1, through the spout 7 of the kettle 1, or by removal of the lid.

### Second Embodiment

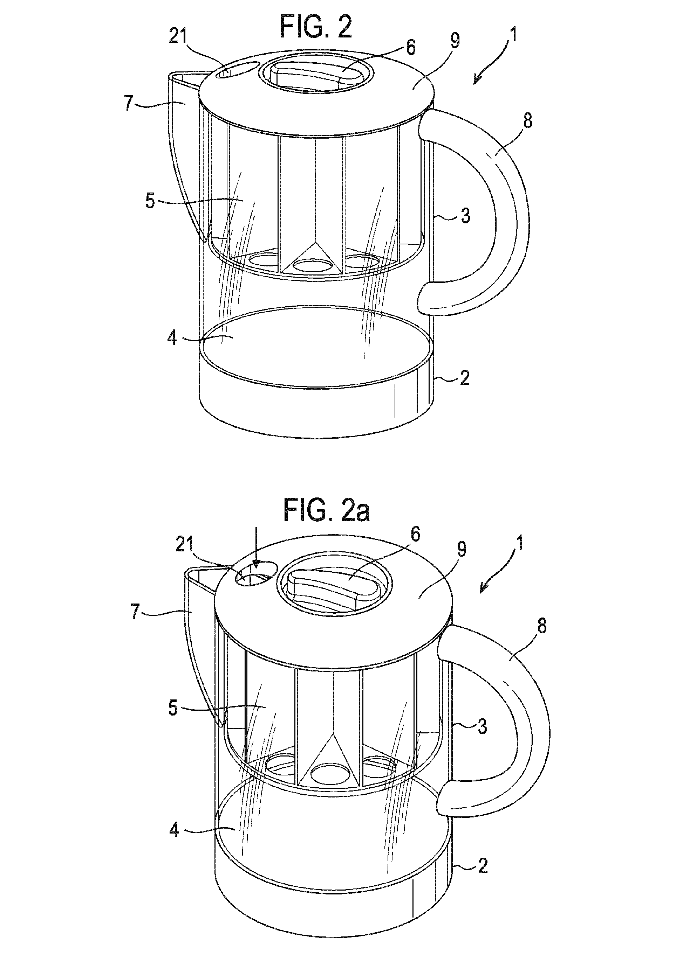

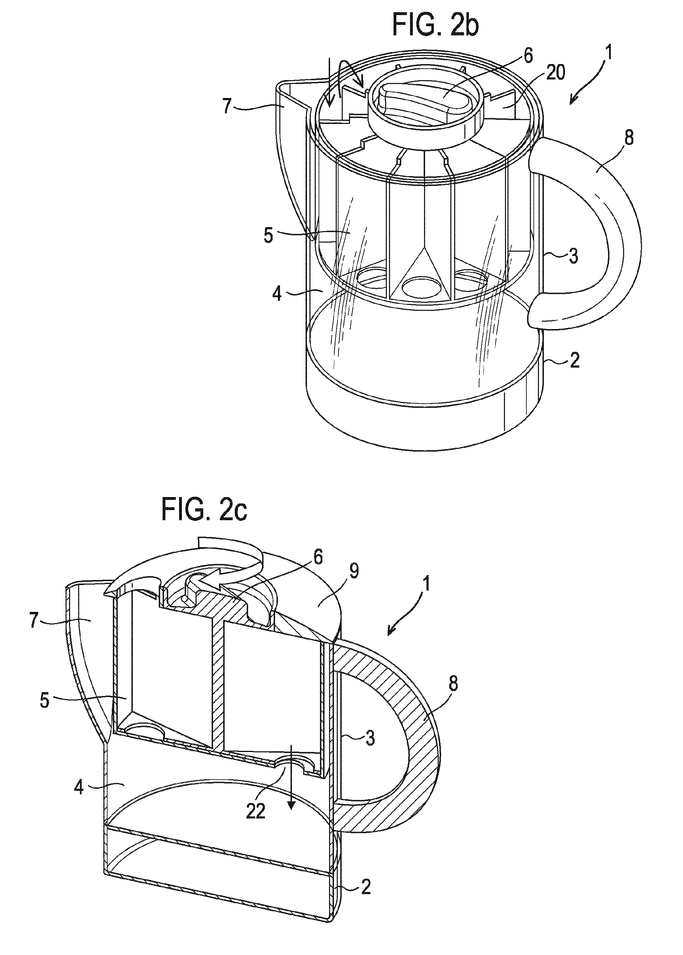

In the second embodiment, the actuator 6 includes a partitioning device 20 that divides the reservoir 5 into a plurality of partitions, preferably of substantially equal volume. The reservoir 5 is filled through a filling aperture 21 in the lid, as shown by the arrow in Figure 2a. As shown in Figure 2b, each partition can overflow into an adjacent partition such that the partitions can be filled via the filling aperture 21 without the need to move the actuator 6. Thus, a partition located towards the handle 8 can be filled using a filling aperture 21 located towards the spout 7, which is the preferred location for filling.

The reservoir 5 includes a dispensing aperture 22 through which water can flow into the heating chamber 4. The partitions each include a lower aperture, or are open at the bottom, such that water can flow from a partition positioned above the dispensing aperture 22 into the heating chamber 4. The partitions are slidably sealed against the bottom of the reservoir 5 such that water is preventing from escaping under the partition walls.

However one of the partitions, which is positioned over the dispensing aperture 22 when the actuator 6 is in a filling position as shown in Figures 2a and 2b, is closed so that water cannot overflow into it from adjacent partitions or so that water cannot flow from that partition through the dispensing aperture.

To dispense water into the heating chamber 4, the user rotates the actuator 6 by an angle corresponding to the number of partitions to be dispensed. As each partition passes over the dispensing aperture 22, its contents are dispensed into the heating chamber 4. In this way, the user is able to dispense a metered quantity of water into the heating chamber. For example, each partition may contain one standard cup of water when full, and the user rotates the actuator by an angle corresponding to three partitions to dispense three cups of water into the heating chamber.

When the heated water is to be dispensed from the kettle 1, the actuator 6 may be rotated to a position in which the closed partition is positioned under the filling aperture 21 such that water cannot escape from the reservoir 5. Alternatively, the filling aperture 21 may be positioned towards the handle 8 of the kettle.

The partitioning device 20 and filling aperture 21 may be arranged so that the reservoir 5 can only be filled in one position of the actuator 6. Furthermore, the actuator 6 may be arranged so that it can only be rotated in one direction, for example by a ratchet or similar arrangement. This arrangement ensures that the partitions are emptied in turn, and the user knows that the reservoir 5 needs refilling when the filling position is reached again after one complete rotation of the partitioning device 20. The actuator 6 may be coupled to a counter that indicates how many of the partitions have been emptied; for example, the counter may return to zero when the actuator 6 has completed a rotation.

The partitioning device 20 may be arranged such that the user may determine the volume in each partition. For example, some or all of the partition walls may be removable, so that partitions can be combined by the user to create larger partitions. For example, each partition may hold one standard cup, but alternate partition walls may be removable to create partitions each holding two standard cups.

### Third Embodiment

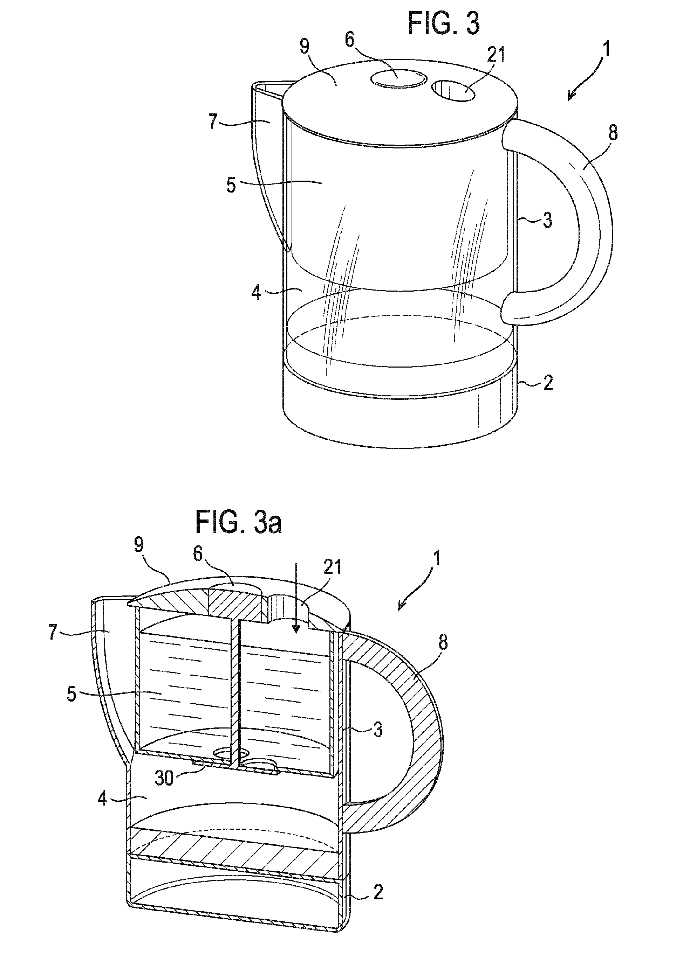

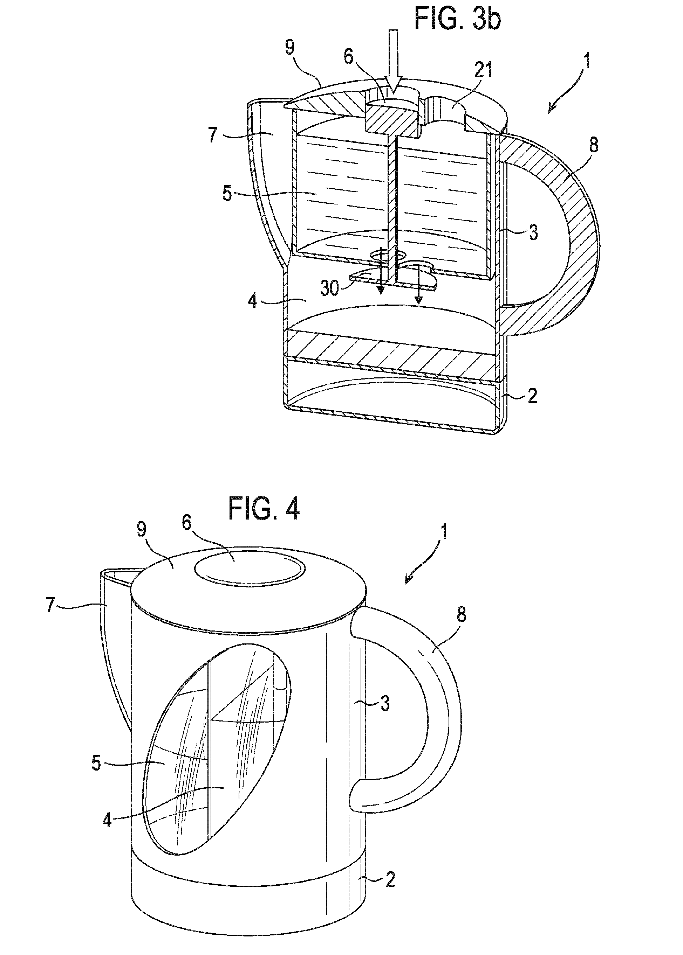

In the third embodiment, the actuator 6 includes a valve 30 that is biased shut, as shown in Figure 3a, but admits water from the reservoir 5 to the heating vessel 4 when the actuator 6 is depressed, as shown in Figure 3b. The reservoir 5 may be filled through a filling aperture 21 in the lid 9 of the kettle. In this embodiment, the lid 9 seals against the walls of the reservoir 5 and the filling aperture 21 is positioned towards the handle 8 of the kettle 1 such that water cannot escape from the reservoir 5 when water is poured out from the heating chamber 4.

In this embodiment, the dispensing of water from the reservoir 5 to the heating chamber 4 is not metered. However, water level marks may be provided on the wall of the heating chamber 4 so that the user can determine how much water has been dispensed.

In a variant of the third embodiment, the reservoir 5 has a small capacity, such as one standard cup, and the user repeatedly fills the reservoir 5 and dispenses its contents into the heating chamber 4 by depressing or otherwise actuating the actuator 6 until the desired volume of water is dispensed into the heating chamber 4. For example, if the user wishes to heat four cups of water, he or she fills the reservoir 5 and dispenses its contents into the heating chamber 4 four times. Alternatively, the reservoir 5 may include a valve that dispenses water automatically into the heating chamber 4.

The small capacity reservoir 5 occupies little space within the kettle body 3 and therefore allows a smaller size of kettle body 3 for a given heating capacity.

In one preferred embodiment, the small capacity reservoir 5 is incorporated in the lid 9 of the kettle 1, and may be formed as a depression within the lid 9; in other words, the lid 9 forms the walls of the reservoir 5, which is open at the top.

The small capacity reservoir 5 may include a valve that opens when the reservoir 5 is full, so as automatically to dispense the contents into the heating chamber 4.

### Fourth Embodiment

In the fourth embodiment, the reservoir 5 dispenses into the heating chamber 4 by means of a tube 40 which forms part of a pump actuated by the actuator 6. Pressing the actuator seals the reservoir 5 and pressurizes the air space above the water in the reservoir 5, thus forcing water up through the tube 40 and into the heating chamber 4. The actuator 6 is biased to return to its initial position, which admits air into the reservoir 5.

As an alternative, an electrically powered pump may be actuated by the actuator 6 to pump water from the reservoir 5 into the heating chamber 4. The electrically powered pump may dispense a predetermined volume of water with each actuation of the actuator 6, to meter the volume of water dispensed. The predetermined volume may be varied under user control. The pump may be powered by a battery that is rechargeable when the kettle 1 is connected to mains power.

The reservoir 5 may be filled by any suitable means, such as through an aperture in the lid 9 of the kettle 1, through the spout 7 of the kettle 1, or by removal of the lid 9.

### Fifth Embodiment

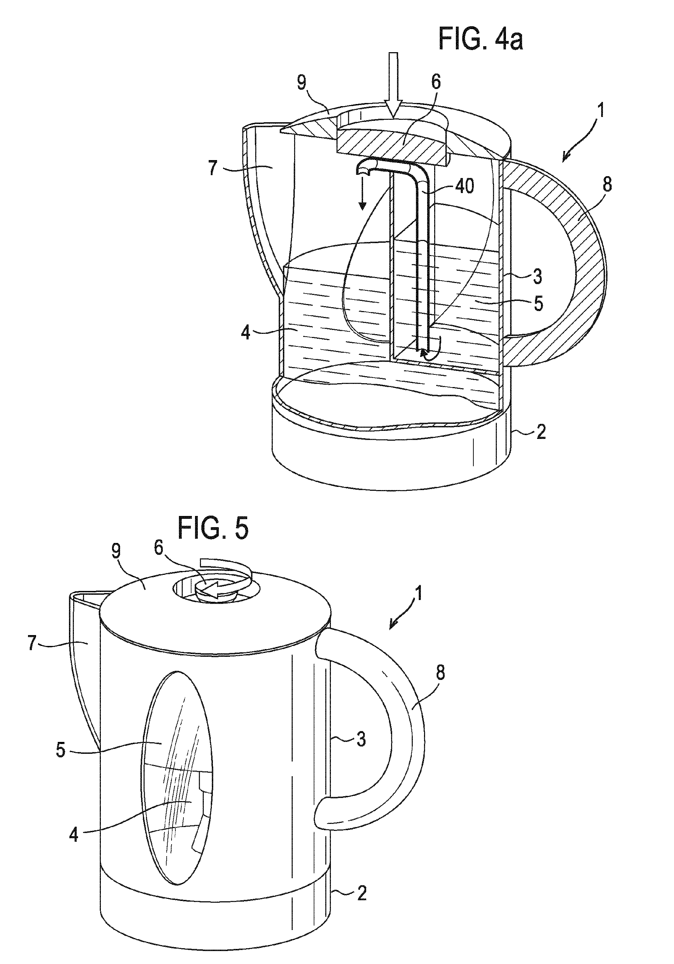

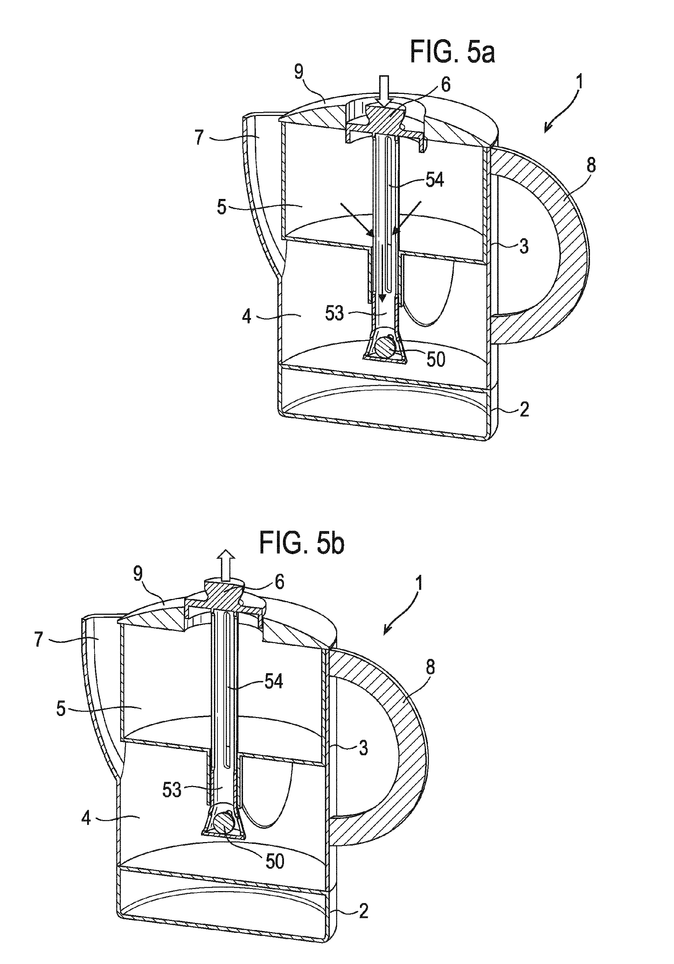

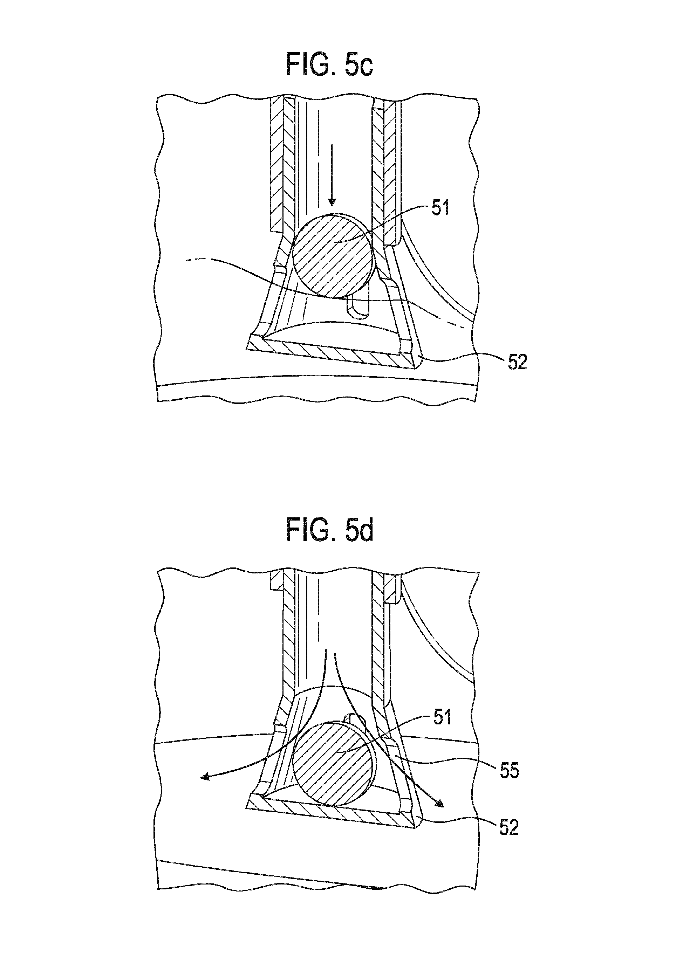

In the fifth embodiment, the actuator 6 includes a valve that causes water to flow into the heating chamber 4 to a predetermined level. Preferably, that level is adjustable. In this way, the user may set the kettle to heat a predetermined volume of water and actuation of the valve causes the heating chamber 4 to be filled to the appropriate level. A specific mechanism for achieving this effect is shown in Figure 5 and 5a to 5d. The reservoir 5 is connected to the heating chamber 4 through a float valve 50, comprising a floating ball 51 located within the end portion 52 of a tube 53 connected to the actuator 6. The end portion 52 may be tapered. Water flows into the tube from the reservoir 5 through apertures 54 in the upper portion of the tube 53. The tapered end portion 52 includes apertures 55 allowing water to flow out from the tube 53 into the heating chamber 4 when the ball 51 is not floating.

As shown in Figure 5c, when the level of water in the heating chamber 4 rises to the level of the tapered end portion 52, the floating ball rises up within the tapered end portion 52 and blocks the tube 53, thus preventing more water from flowing into the heating chamber 4. The level of the tapered end portion 52 may be adjusted by moving the actuator 6 up or down, thus varying the level at which the float valve closes.

As an alternative, the actuator 6 may be rotatable, and include a mechanism for converting the rotation into translation of the tube 53 up or down.

An additional mechanism may be included to close the valve regardless of the water level in the heating chamber 4, so that water does not flow into the heating chamber 4 from the reservoir 5 as water is poured from the heating chamber 4.

### Sixth Embodiment

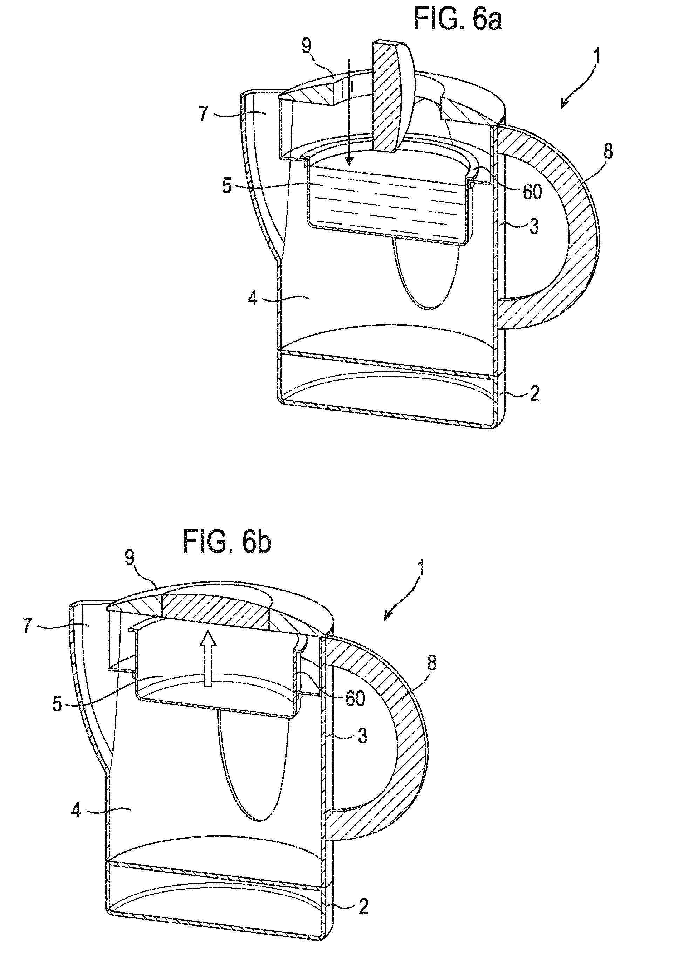

In the sixth embodiment, the reservoir 5 includes one or more collapsible sections 60 which are biased into the reservoir 5 e.g. by springs. As the reservoir 5 is filled, as shown in Figure 6a, the collapsible section 60 moves downwardly against the bias into the heating chamber 4. As the reservoir 5 empties, as shown in Figure 6b, the collapsible section 60 moves into the reservoir 5, thereby increasing the volume of the heating chamber 4. Where there is more than one collapsible section 60, these may be arranged telescopically.

Hence, space available to the heating chamber 4 increases as the volume of water in the reservoir 5 is reduced. In this way, the total volume requirement of the kettle body 3 is reduced. In particular, the height of the kettle 1 may be reduced.

### Seventh Embodiment

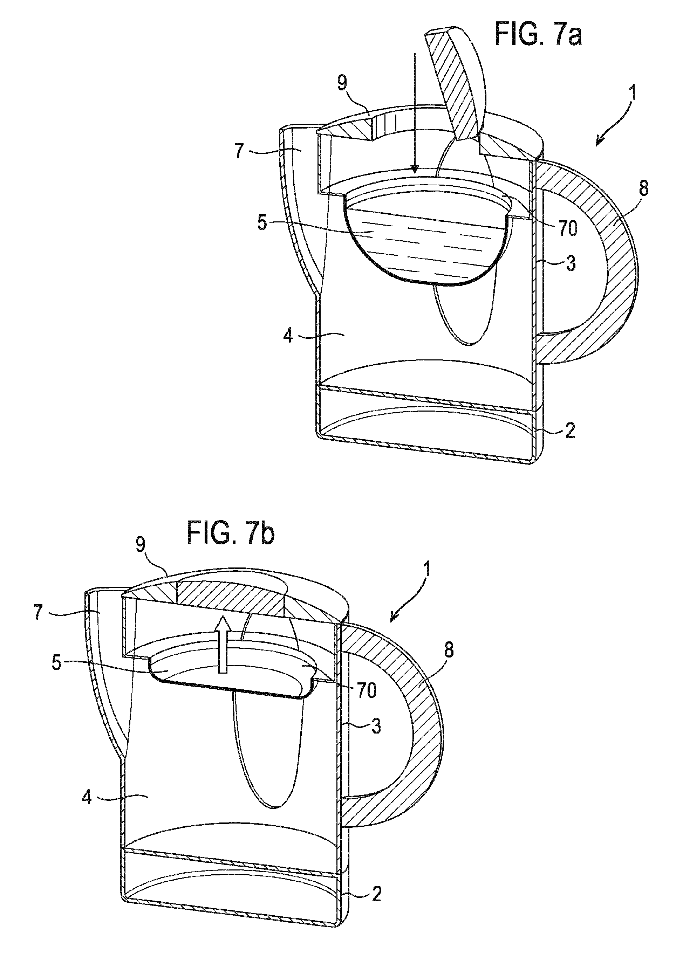

The seventh embodiment is a variant of the sixth embodiment, in which the base of the reservoir 5 comprises a resilient diaphragm 70, for example made of rubber. As the reservoir 5 is filled, the diaphragm 70 extends downwardly into the heating chamber 4 under the weight of water, as shown in Figure 7a. As the reservoir 5 empties, as shown in Figure 7b, the diaphragm 70 contracts, thereby increasing the volume of the heating chamber 4.

The reservoir 5 of the sixth or seventh embodiment may be provided as a discrete part for retrofitting to an existing kettle, for example by means of a collar that fits around the top of the vessel, under the lid 9.

Either the sixth or seventh embodiments may be used in conjunction with a dispensing arrangement for dispensing water from the reservoir 5 to the heating chamber 4. The dispensing arrangement may be as described above with reference to any one of the first to fifth embodiments, with modifications as necessary.

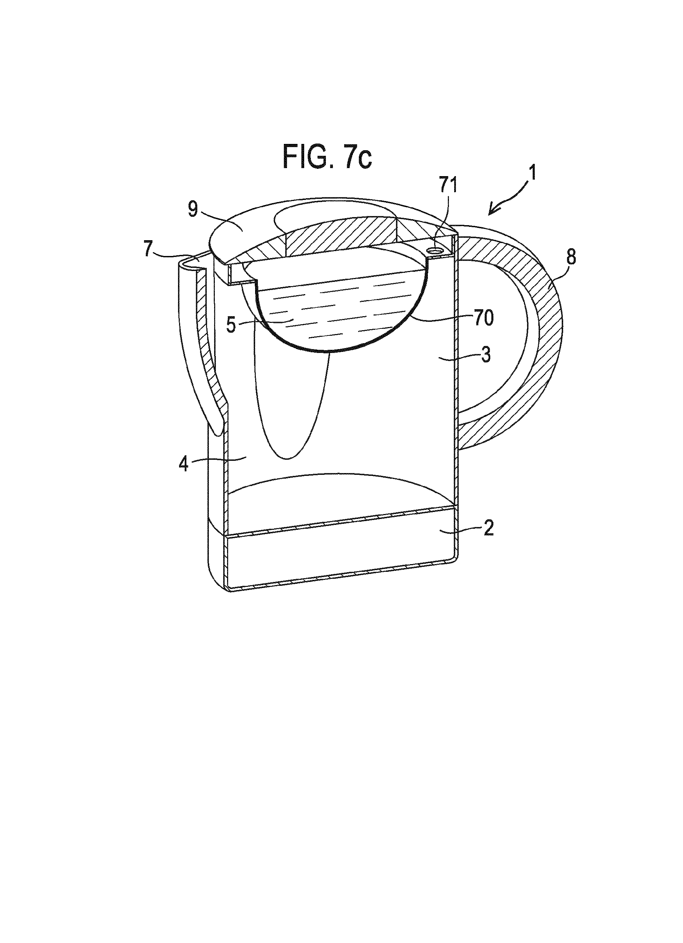

Figure 7c shows a variant of the seventh embodiment, in which a dispensing aperture 71 is disposed at the top of the reservoir 5, to allow liquid to be dispensed into the heating chamber 4 from the reservoir 5. The dispensing aperture 71 may be positioned towards the handle 8, so that tipping the kettle 1 backwards towards the handle 8 causes liquid to be dispensed into the heating chamber 4, while tipping the vessel forward towards the spout 7 dispenses liquid from the heating chamber 4. Alternatively, the dispensing aperture 71 may be positioned towards the spout 7.

Alternatively, liquid may be pumped from the reservoir 5 into the heating chamber 4, or the diaphragm may be lifted manually or electrically so that liquid flows out of the dispensing aperture 71.

The dispensing aperture 71 is described in a variant of the seventh embodiment, but may also be applied to other embodiments; for example, the reservoir 5 may have a fixed volume rather than being expandable. This arrangement leads to a very simple and intuitive operation, requiring no moving parts.

As an alternative to requiring the vessel to be tipped backwards to dispense liquid through the dispensing aperture 71, the reservoir 5 may be pivotable relative to the vessel, so as to dispense the liquid.

The dispensing aperture 71 may also allow excess liquid to overflow from the reservoir 5 and enter the heating chamber 4. In this way, both the reservoir 5 and the heating chamber 4 may be filled during the same filling operation, with the reservoir 5 being completely filled and the heating chamber 4 being filled to the level required by the user. Since the reservoir 5 is arranged not to overflow through the spout 7 when the vessel is tipped forward, the reservoir 5 may be used to refill the heating chamber 4 without requiring another filling operation. The heating chamber 4 advantageously may be provided with a level indicator such as described in the ***Level Indicator*/*Detector*** section below. A level indicator may also be provided in the reservoir 5, or at least an indicator that the reservoir 5 is full, such as a float or needle, or an indicator activated by liquid flowing through the dispensing aperture 71.

The dispensing aperture 71 may be provided with a user-operable valve that prevents water from leaving the reservoir 5 unless opened by the user.

The sixth or seventh embodiments may be used in a filter kettle, wherein the reservoir 5 includes a filter that dispenses filtered water into the heating chamber 4, without the need for user actuation.

### Eighth Embodiment

The eighth embodiment is similar to the third embodiment, but includes a secondary valve 80 or flap that allows water or steam to flow from the heating chamber 4 to the reservoir 5 when the reservoir 5 is empty and the heating chamber 4 is at a maximum level.

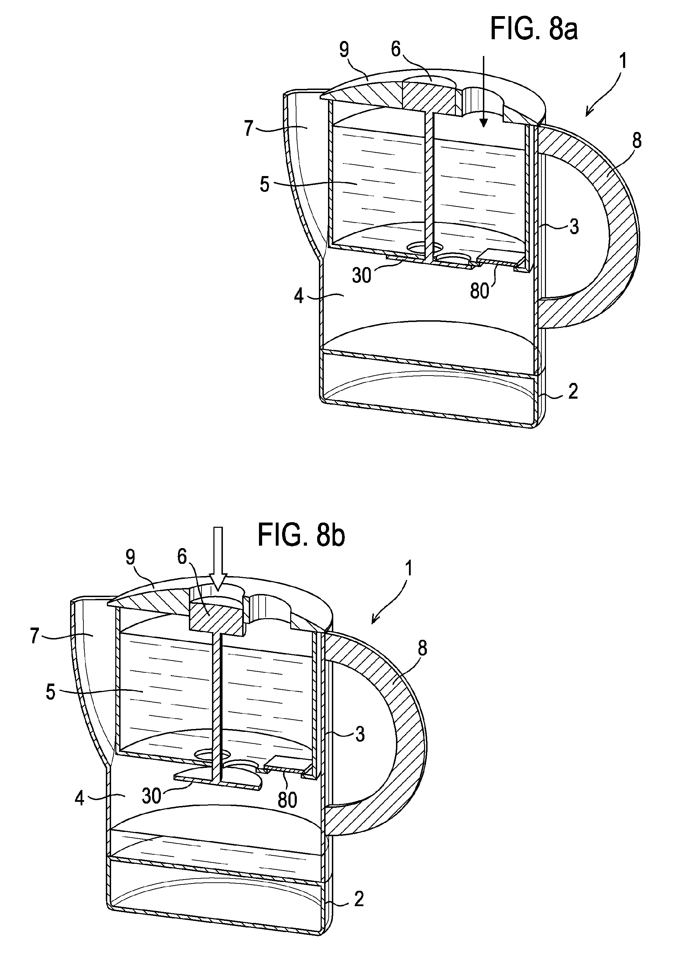

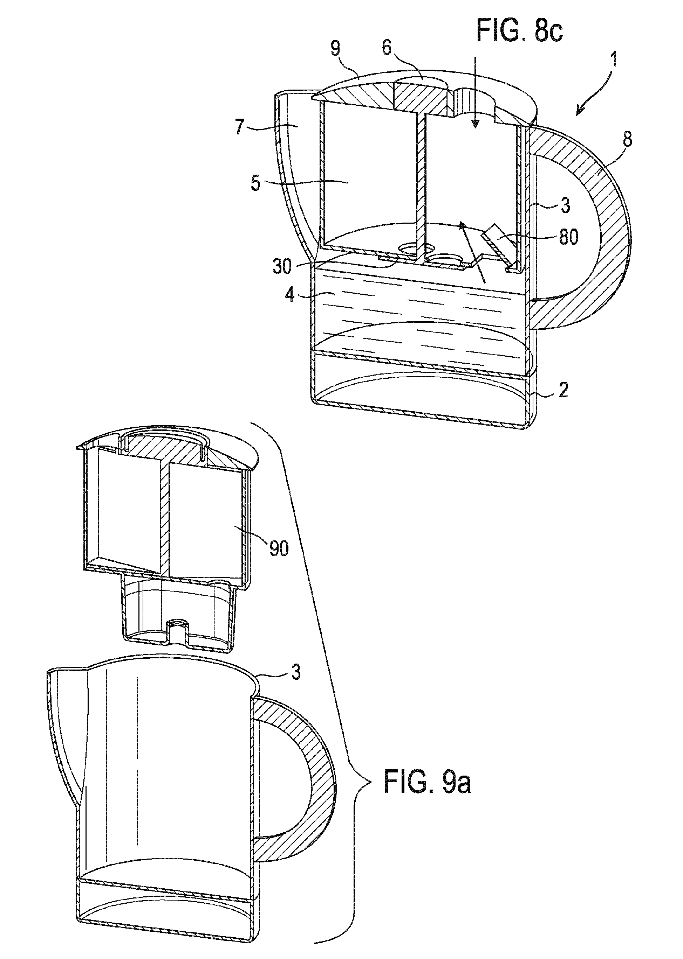

As in the third embodiment, water may be dispensed from the reservoir 5 to the heating chamber 4 by actuating the actuator 6 and opening the valve 30, as shown in Figures 8a and 8b. As shown in Figure 8c, when the water level in the heating chamber 4 rises to the bottom of the reservoir 5 and there is no water in the reservoir, the valve 80 opens and allows water to flow back into the reservoir 5.

In this way, the total volume requirement of the kettle body 3 is reduced. In particular, the height of the kettle 1 may be reduced.

### Removable Reservoir

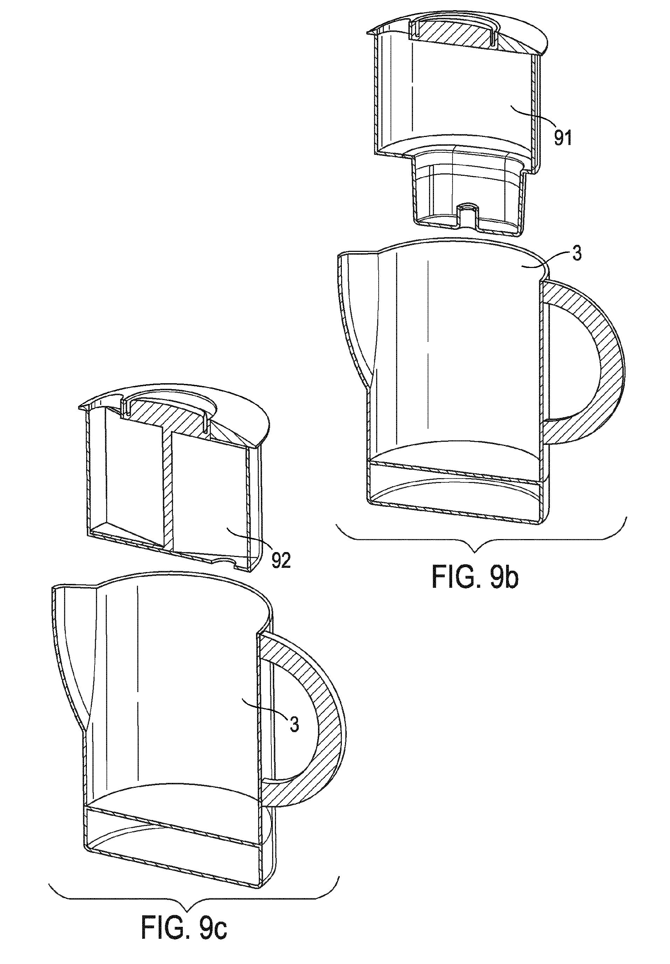

As shown in Figures 9a to 9c, the reservoir 5 in any of the above embodiments may be removable from the kettle body 3, for example to allow the reservoir to be filled from a tap separately from the kettle body 3. The removable reservoir 5 may be arranged so that it can be filled when located in the kettle body 3, and may include an interlock to prevent removal from the kettle body 3 whilst water is in the reservoir 5.

The removable reservoir 5 may comprise a combined dispenser and filter arrangement 90, a filter arrangement 91, or a dispenser arrangement 92. If necessary, the removable reservoir may include a valve to avoid leakage when removed from the kettle body 3. The kettle 1 may be provided with a plurality of interchangeable removable reservoirs 5 of different types, such as a filter reservoir and a metering reservoir as described in the above embodiments. The removable reservoir 5 may be retrofitted to an existing kettle body 3, to avoid the need to replace an existing kettle.

### Filling Arrangements

As described above, it is desirable to fill the reservoir 5 using a filling aperture 21 located towards the spout 7 of the kettle 1, away from the handle 8. However, this may lead to liquid escaping from the reservoir 5 through the filling aperture 21 when pouring liquid from the heating chamber 4. In the arrangement proposed in WO-A1-O1/93733, the filling aperture is in the centre of the lid, and is sealed to prevent water escaping from the aperture, but this arrangement is disadvantageous because of the central location of the aperture and the need for a seal. Filling arrangements will now be described which allow filling from the side of the kettle 1 closer to the spout 7, yet do not require a seal. These filling arrangements may be applied to at least some of the embodiments described above.

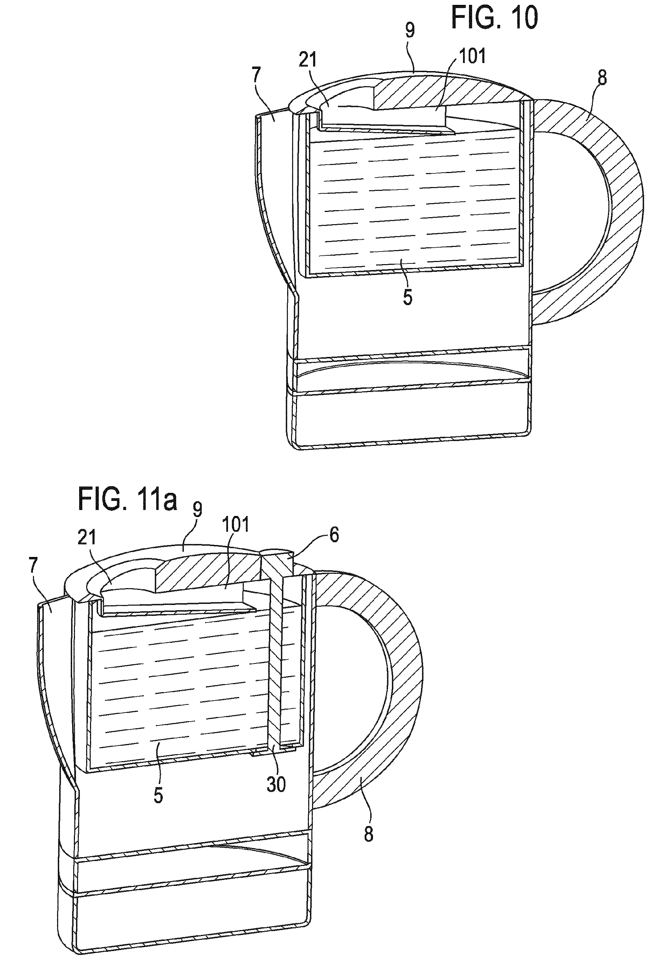

In the arrangement shown in Figure 10, a passage 101 is provided leading from the filling aperture 21, located in the lid 9 on the spout side of the kettle 1(i.e. offset from the central vertical axis of the kettle 1 in a direction towards the spout 7), to empty into the reservoir 5 at a location towards the handle 8. The floor of the passage 101 is preferably angled downwards towards the handle 8. The passage 101 may be integral with the lid 9, or separable to assist cleaning, or may be retrofitted to the lid 9 of an existing kettle.

When the kettle 1 is tipped forward to dispense water from the heating chamber 4, liquid cannot escape from the reservoir 5 through the aperture 21 because the passage 101 opens at the handle end of the reservoir 5, while the liquid collects towards the spout end of the reservoir 5.

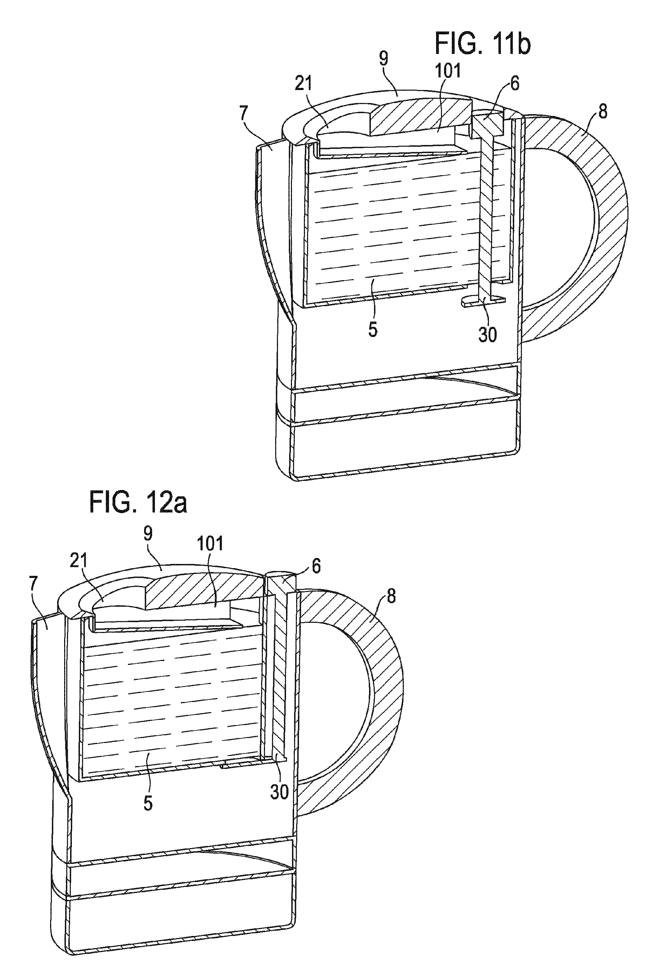

Figures 11a and 11b show the filling arrangement of Figure 10 applied to a first variant of the third embodiment, in which the actuator 6 is positioned towards the handle 8, so as not to obstruct the passage 101. The location of the actuator 6 towards the handle 8 allows one-handed operation of the actuator 6 while holding the handle 8. This arrangement prevents liquid from escaping from the reservoir 5 around the actuator 6 when the kettle is tipped forward; hence, there is no need to seal around the actuator 6.

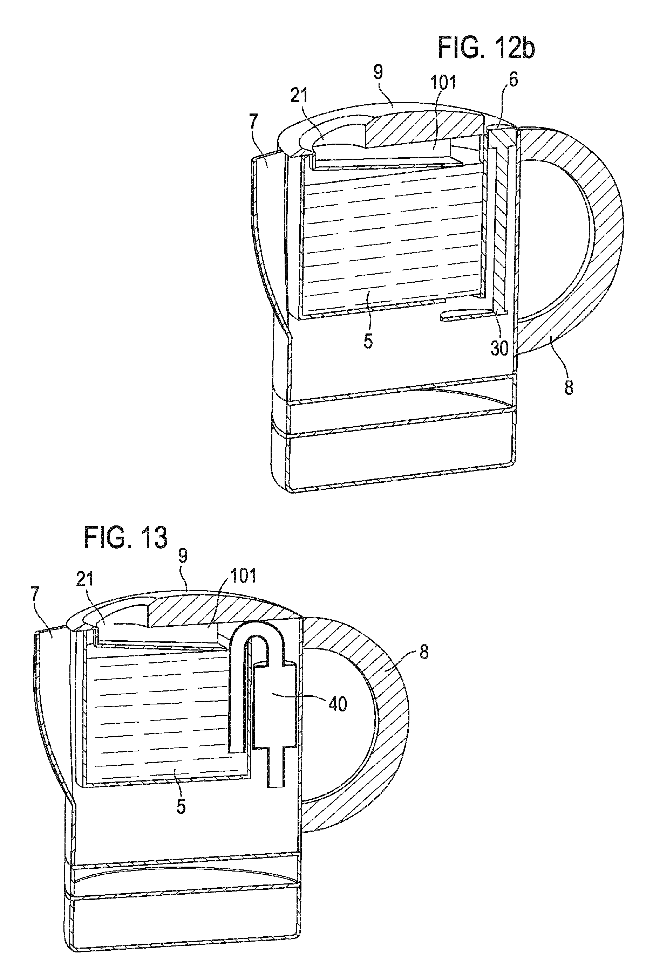

Figures 12a and 12b show the filling arrangement of Figure 10 applied to a second variant of the third embodiment, in which the actuator 6 is positioned towards the handle 8 and outside the reservoir 5, while the valve 30 extends under or on a side of the reservoir 5. By positioning the actuator outside the reservoir, the problem of water escaping from the reservoir 5 around the actuator 6 is avoided altogether.

Figure 13 shows the filling arrangement of Figure 10 applied to a variant of the fourth embodiment, in which a pump 40 dispenses water from the reservoir 5 into the heating chamber 4. The pump is located towards the handle 8, and may therefore be actuated mechanically by a pump actuator located near the handle 8, or electrically by a switch located near the handle 8. The pump 40 is located outside the reservoir 5, but may alternatively be located within the reservoir 5.

The filling arrangements described above may be retrofitted to existing kettle bodies 3, for example by adding the reservoir 5 and, if required, replacing an existing lid. The reservoir 5 may be removable from the kettle body 3, and may be integrated with the lid.

In embodiments having a filling aperture 21, there may be provided a flap or cover over the spout 7, to encourage use of the filling aperture 21.

### Ninth Embodiment

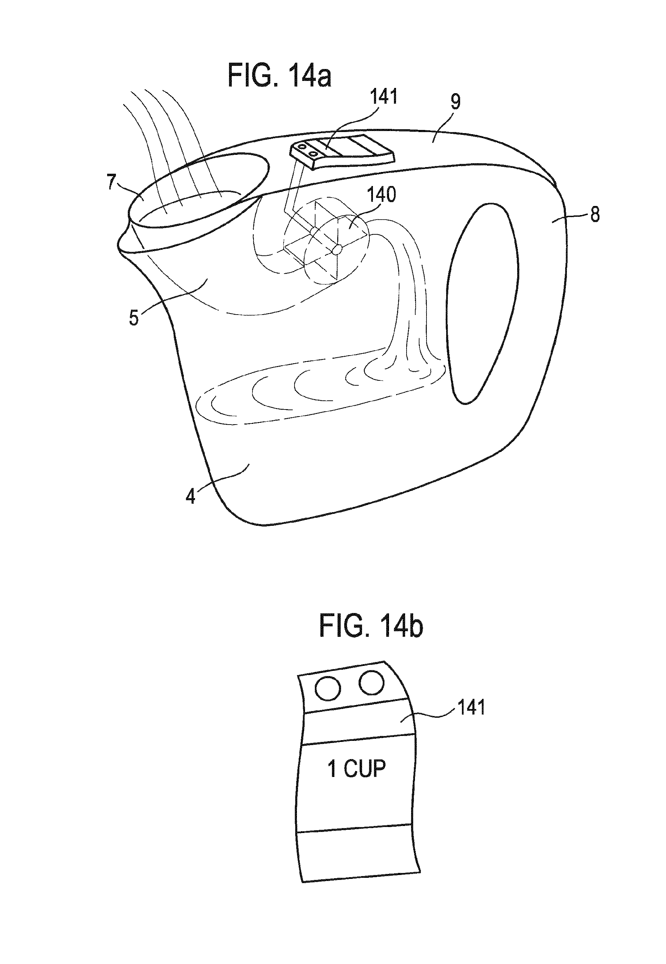

In the ninth embodiment, the reservoir 5 dispenses liquid into the heating chamber 4 as the reservoir 5 is filled, and the volume of liquid dispensed is metered by a flow meter 140 having a display 141 for displaying to the user the volume of liquid dispensed, as shown in more detail in Figure 14b. The display may offset the displayed volume to include the volume of the reservoir 5, which flows into the heating chamber as filling is completed. The display 141 may be electronically or mechanically coupled to the meter 140.

Hence, the user sees how much liquid is put into the kettle 1 during filling, allowing the required volume to be judged more easily. Preferably, the display 141 is on the lid 9 or upper surface of the kettle 1, so as to be easily read as the kettle 1 is filled.

### Level Indicator/Detector

Embodiments of the invention may advantageously include a level indicator that indicates that a predetermined volume of water is present in the heating chamber; this feature is particularly advantageous in those embodiments that do not meter the amount of water dispensed from the reservoir, such as the third and fourth embodiments. The level indicator may comprise a series of markings indicating the water level corresponding to different numbers of cups.

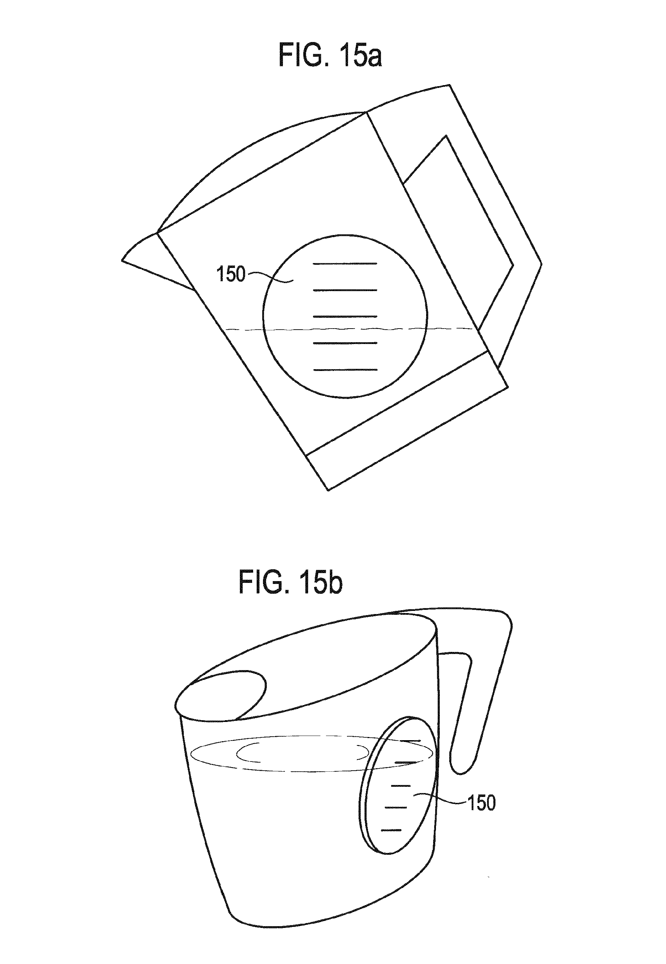

As shown in Figures 15a and 15b, the level indicator may be a self-levelling indicator 150 that rotates as the kettle 1 is tilted for filling, so that the markings remain horizontal. In this way, the indicator provides a more accurate indication of liquid level as the kettle 1 is filled. The indicator 150 may be mounted internally or externally of the body 3. The indicator 150 may be weighted to rotate automatically under gravity. The indicator 150 may comprise a transparent or translucent member in front of or behind a water window in the kettle 1, and is preferably circular or has a partial circular section to allow rotation thereof. The indicator 150 may be retrofitted to an existing kettle having a water window. The kettle 1 may include illumination to make the indicator 150 more visible.

Alternatively, the level indicator may comprise an electronic level detector that provides a visual and/or audible level indication to the user, such as by means of different coloured lighting, a varying tone, or a spoken indication of the level. The electronic level detector may comprise a series of electrical or electronic sensors at different heights along the inner wall of the heating chamber 4, each sensor detecting whether it is immersed. Alternatively, an ultrasonic level sensor may be used, in which acoustic pulses are reflected off the surface of the water in the heating chamber and the time delay of the reflected acoustic pulses is used to detect the level of the water.

Alternatively, the level indicator may comprise means for setting an adjustable threshold level, and for indicating that the level has been reached. In one example, a float switch is connected in an electric circuit for triggering an audible and/or visual alarm indicating that a predetermined level has been reached. Alternatively, the electronic level detector described above may be arranged to provide an indication only when the predetermined level has been reached. Alternatively, the level indicator may comprise a simple mechanical device, such as a float that only becomes visible as the predetermined level is reached. The float may also close off the filling aperture. The float may be carried on a steam tube for conveying steam from above the water in the heating chamber 4 to a steam sensor in the base 2, the steam tube extending through the water in the heating chamber 4.

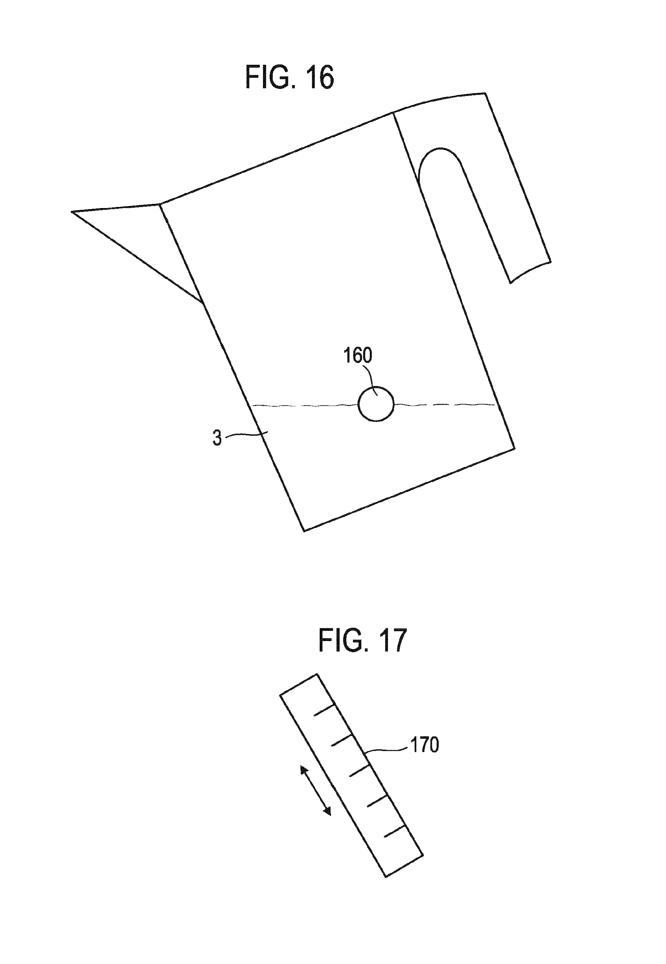

Alternatively, as shown in Figure 16, the level indicator may comprise one or more stickers or other markers 160 that can be added to the water window or gauge of an existing kettle, to indicate a preferred filling level for a particular use. For example, a user may require a kettle either to make a single cup of tea, or a pot of tea. The user may then add stickers to their existing kettle indicating the required volumes for the single cup, and for the pot.

Alternatively, as shown in Figure 17, the level indicator may comprise a sliding indicator 170 attached to a water window or gauge, that may be adjusted by the user so as to indicate the required filling level.

Where the level indicator requires electrical power, this may be provided from the source of electricity for heating, or from a rechargeable battery or capacitor. Where the kettle 1 is cordless, the rechargeable battery or capacitor may be carried within the kettle 1 when separated from the cordless base, so that the level indicator may operate when the kettle 1 is removed from the cordless base.

In the tenth to thirteenth embodiments, the available volume of the heating chamber 4 is restricted during filling, and may be varied by the user. In this way, filling the heating chamber 4 to maximum capacity is discouraged and filling to a predetermined level less than maximum is facilitated.

### Tenth Embodiment

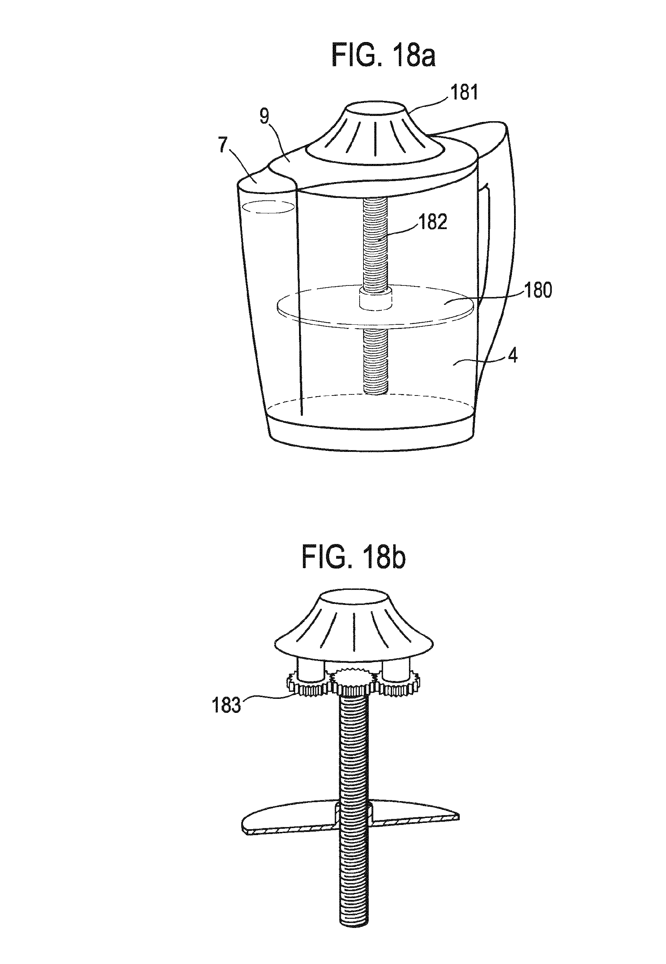

In the tenth embodiment, as shown in Figure 18a, the spout 7 extends through a substantially vertical passage and opens towards the bottom of the heating chamber 4. A plate 180 is movable substantially vertically within the heating chamber 4 by engagement with a screw thread 182 turned by a knob 181 in the lid 9 of the kettle 1. The plate 180 loosely seals against the walls of the heating chamber 4 so that once the liquid level reaches the plate 180, the liquid level will rise up in the spout 7 and may overflow or be visible in the spout 7, thereby indicating to the user that the required liquid level has been reached. After filling, the plate 180 is released or at least raised so that the water level in the spout 7 returns substantially to that in the heating chamber 4, thus avoiding liquid spurting from the spout 7 as it boils. This may be achieved by a sprung return mechanism, which stores energy as the knob 181 is turned. When the spring return mechanism is released, it drives the screw thread in the opposite direction to return the platform 180 to a raised position.

As shown in Figure 18b, the knob 181 may be connected to the screw thread 182 by a planetary gear 183 to reduce the rotation of the knob 181 required to move the platform 180 by the required distance. Alternatively, the plate 180 may be moved by a plunger, similar to that in a cafetière, with a shaft instead of the screw thread 182.

Preferably, an interlock is provided to prevent heating of the heating chamber when the platform 180 is lowered.

### Eleventh Embodiment

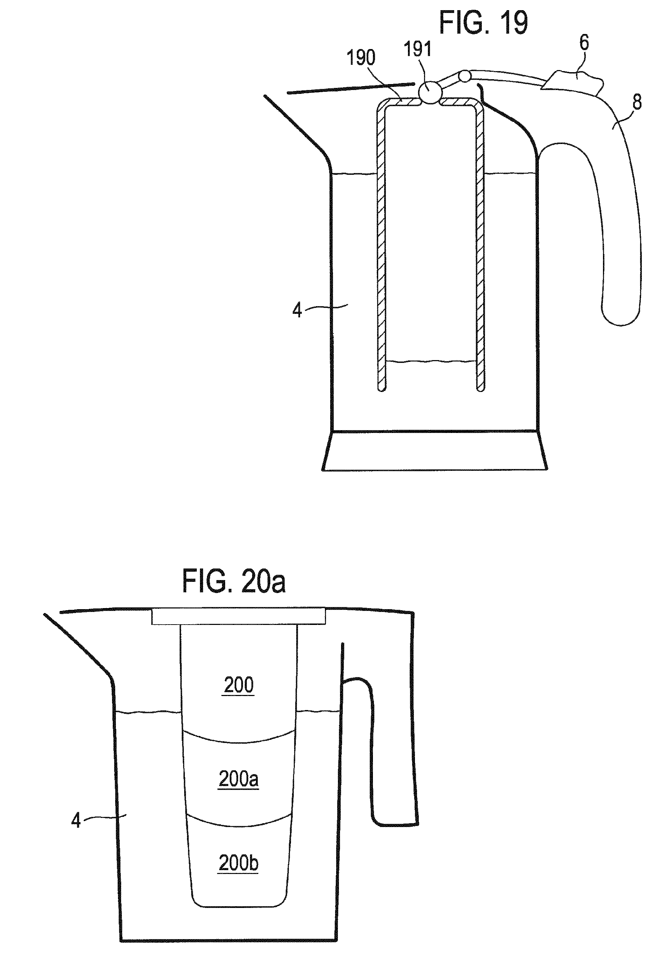

In the eleventh embodiment as shown in Figure 19, an air chamber 190 having an open inlet in the bottom, such as an open base, is disposed within the heating chamber 4. A valve 191 allows air to be released from the top of the air chamber 190. When the heating chamber 4 is filled, air pressure prevents liquid from filling the air chamber 190, thereby reducing the capacity available for liquid within the heating chamber 4. After filling, the valve 191 may be opened to allow liquid to enter the air chamber 190 and equalise the liquid level inside and outside the air chamber 190. The valve may be actuated by an actuator 6, shown here in the handle 8. The actuator 6 may also be connected to a switch for switching on heating of the heating chamber 4, or the actuator 6 may prevent the switch from being operated unless the valve 191 is open.

If the user wishes to use the full volume of the heating chamber during filling, the valve 191 may be held open during filling. The height of the air chamber 190 may be adjustable, for example by means of telescopic walls, thus allowing the predetermined level to be adjusted.

### Twelfth Embodiment

In the twelfth embodiment, as shown in Figure 20a, a liquid impermeable insert 200 is placed within the heating chamber 4 to reduce the available liquid volume thereof. The insert 200 may have one or more extension portions 200a, 200b added thereto, to increase the volume occupied by the insert 200 and further reduce the available liquid volume of the heating chamber 4. Alternatively, the insert may be expandable, for example by means of telescopic sections, or inflatable. The insert 200 may be expandable by means on an actuator in the lid 9 of the kettle 1, including an indicator showing the degree of expansion and/or the available volume of the heating chamber 4. The actuator may be arranged to allow the insert 200 to retract when heating of the heating chamber 4 is activated. The retraction may be driven by a spring or other bias within the insert 200, or by buoyancy of the part of the insert within the liquid in the heating chamber 4.

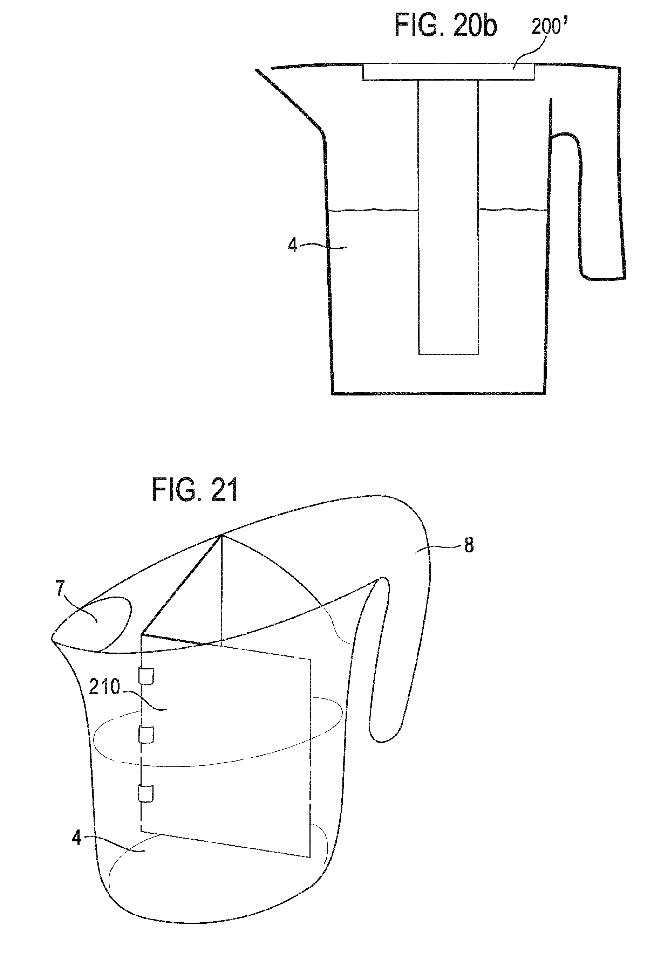

The insert 200 may be removed if the full volume of the heating chamber 4 is required, or replaced by another insert 200' of different size, as shown in Figure 20b. The insert 200 may be retrofitted on an existing kettle.

### Thirteenth Embodiment

In the thirteenth embodiment, as shown in Figure 21, a movable partition 210 is provided within the heating chamber 4 to reduce the available liquid volume in the heating chamber 4 depending on the position of the partition 210. In the embodiment shown in Figure 21, the partition 210 is formed from a fixed internal wall having a hinged wall connected thereto; both said walls may be sealed against the side wall of the kettle 1, or may have a diaphragm connected therebetween in the form of bellows. The diaphragm could be inflated before filling and deflated before heating.

In each of the tenth to thirteenth embodiments, there may be provided a level indicator that indicates the volume of water in the heating chamber 4 when the available volume thereof is restricted. There may be provided a second level indicator, such as a different scale on a water window, to indicate the volume of water in the heating chamber 4 when the available volume thereof is not restricted.

The means for restricting the available volume of the heating chamber 4 may be electrically actuated, for example by means of a motor.

In the fourteenth to eighteenth embodiments described below, the reservoir 5 stores a predetermined volume of liquid during filling, which is dispensed substantially completely into the heating chamber 4 prior to heating.

### Fourteenth Embodiment

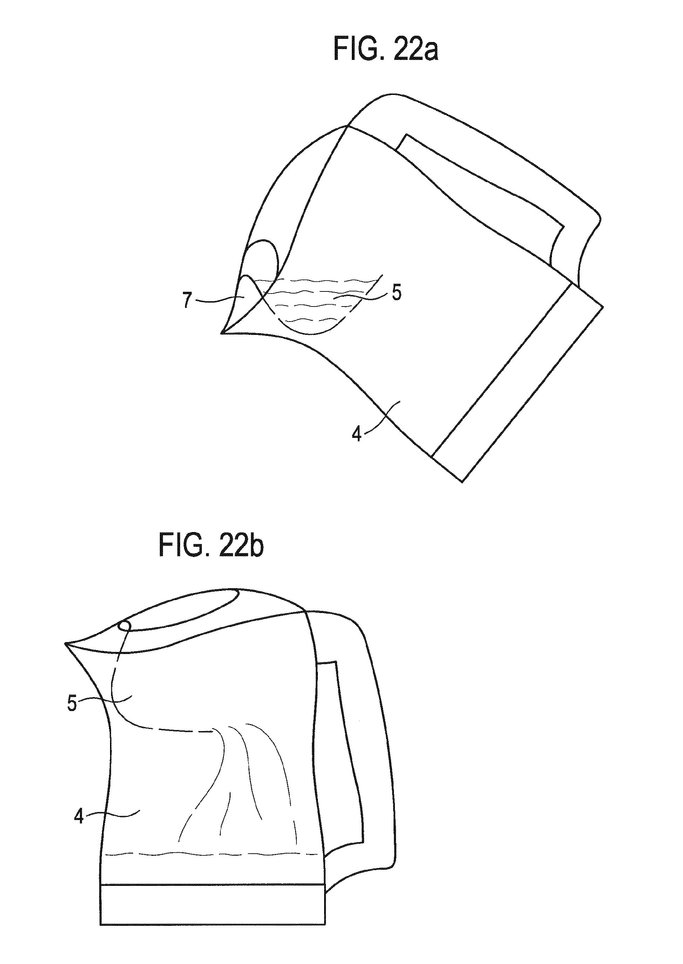

In the fourteenth embodiment, the reservoir 5 is arranged at an angle to the horizontal so that it can be filled when the kettle 1 is tipped forward, as shown in Figure 22a. When the kettle 1 is returned to the upright position, as shown in Figure 22b, the reservoir 5 empties into the heating chamber 4. Preferably, the position of the reservoir 5 is fixed within the kettle 1, so that tilting the kettle 1 causes the reservoir 5 to tilt by a corresponding angle. If multiple volumes of the reservoir 5 are required, then the reservoir 5 may repeatedly be filled, as shown in Figure 22a, and the kettle 1 returned to its upright position, as shown in Figure 22b. If no metering of liquid is required, the kettle 1 may be filled in its upright position, as shown in Figure 22b.

In an alternative, the reservoir 5 is pivotable and may rotated upwards against the underside of the lid 9 when not in use, thereby avoiding obstruction of the spout 7 and moving the reservoir out of view. The reservoir 5 may be balanced or biased so that it rotates upwards against the lid when empty, but rotates downwards into the position shown in Figure 22a when the kettle 1 is tipped forwards.

### Fifteenth Embodiment

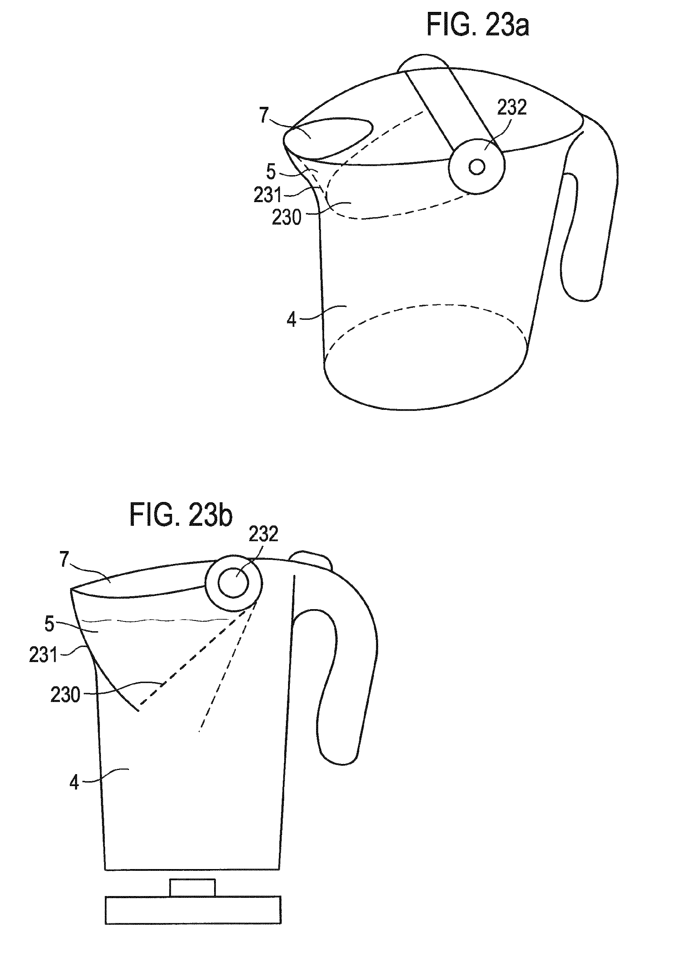

In the fifteenth embodiment, the reservoir 5 has a moveable floor 230 comprising a hinged flap that seals against a wall 231 of the reservoir 5, as shown in Figure 23a. The position of the moveable floor 230 is adjustable according to the volume of liquid required, by turning a knob or lever 232. When the reservoir 5 is full, the floor 230 is released downwardly, as shown by the dotted line in Figure 23b, so that the contents of the reservoir 5 are dispensed into the heating chamber 4. A release mechanism for the floor 230 may be actuated through the lid 9 or the spout 7. The release mechanism may be coupled to a switch for switching on heating of the heating chamber 4, so that heating cannot be performed before the floor 230 is released.

### Sixteenth Embodiment

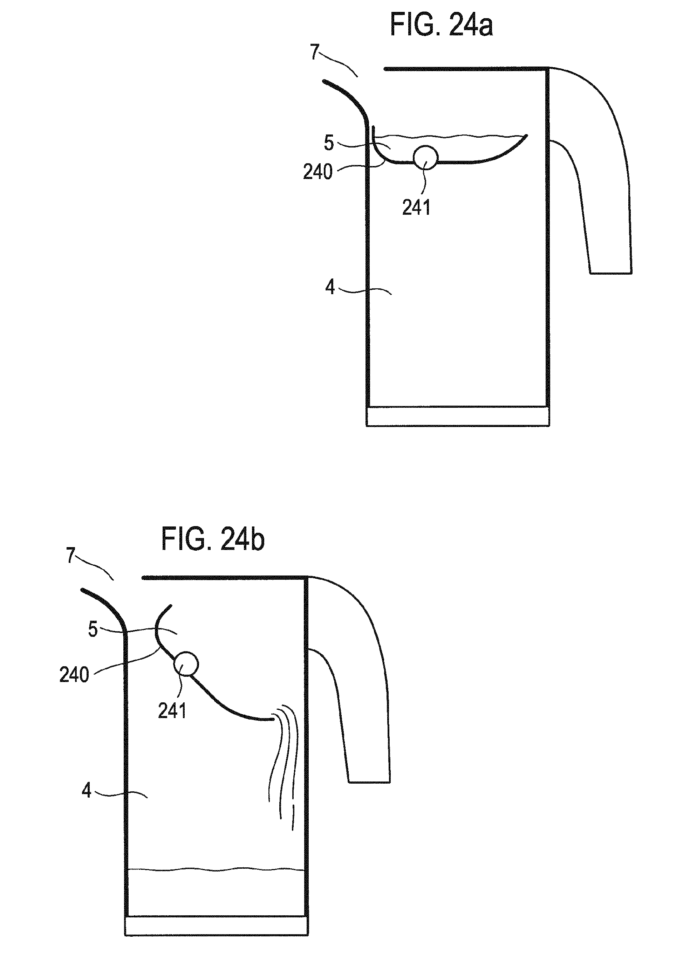

In the sixteenth embodiment, as shown in Figures 24a and 24b, the reservoir 5 has a pivotable floor 240 having a centrally offset pivot 241, attached to a wall of the kettle 1. The pivot 241 has a bias such that, when the level of liquid in the reservoir 5 is below a predetermined threshold, the floor 240 remains upright, but once the level reaches a predetermined threshold, the floor overbalances against the bias and dispenses the contents of the reservoir 5 into the heating chamber, as shown in Figure 24b. The floor 240 is then biased back to its substantially horizontal position, to allow further filling if required.

The floor 240 is preferably dimensioned so as not completely to seal the heating chamber 4. Alternatively, the floor 240 may be forced into a tilted position is excess pressure builds up in the heating chamber 4, for example by virtue of the central offset of the pivot 241.

### Seventeenth Embodiment

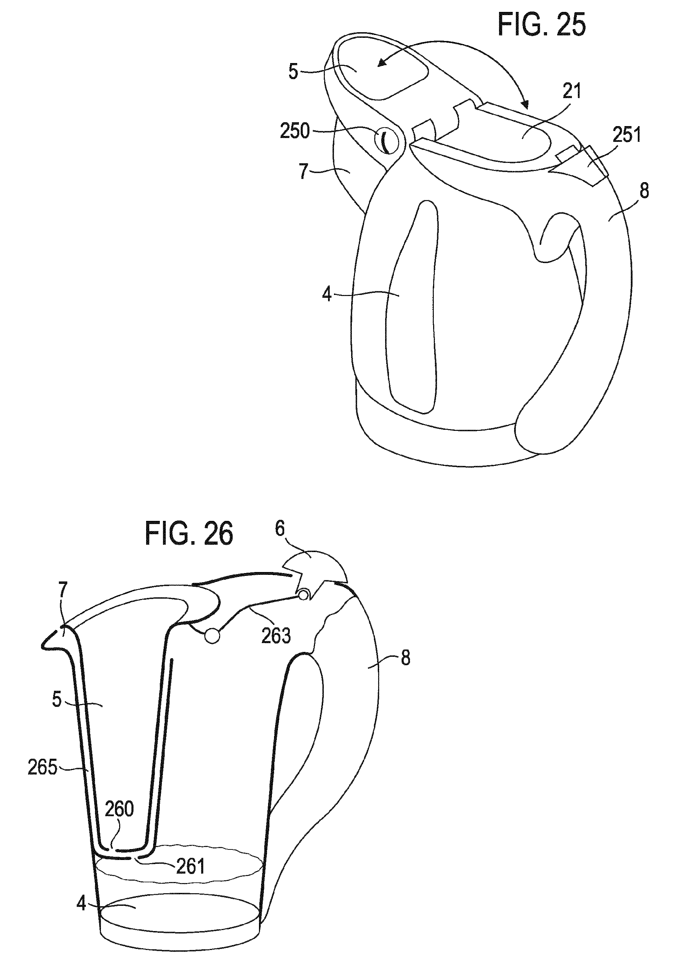

In the seventeenth embodiment, as shown in Figure 25, the reservoir 5 is mounted on a substantially horizontal hinge 250 above the spout 7 of the kettle 1. In the filling position shown in Figure 25, the reservoir 5 may cover the spout 7. The reservoir 5 may be biased into the filing position to encourage users to fill the kettle 1 using the reservoir 5, rather than through the spout 7.

The reservoir 5 is filled in the filling position, and then pivoted about the hinge 250 so that liquid is poured from the reservoir 5 into the heating chamber through the filling aperture 21 in the lid 9 or top of the kettle 1. The reservoir 5 may then be pivoted back into the position shown in Figure 25. The filling and pivoting actions may be repeated if multiple volumes of the reservoir 5 are to be heated. The kettle 1 can also be filled directly through the filling aperture 21 or the spout 7 if metering is not required. The reservoir 5 may rest in the position shown in Figure 25 during heating of the liquid in the heating chamber 4, or may rest on top of the filling aperture 21 to act as a lid. A latch 251 may be provided to secure the reservoir 5 in the latter position, particularly if the reservoir 5 is biased as described above.

### Eighteenth Embodiment

In the eighteenth embodiment, as shown in Figure 26, the reservoir 5 comprises a removable receptacle that can be seated in a recess 265 within the kettle 1. A valve in the reservoir 5 and/or the recess 265 allows liquid to be dispensed into the heating chamber 4. The valve may comprise a first aperture 260 in the bottom of the reservoir and a second aperture 261, not aligned with the first aperture 260, in the bottom of the recess 265, so that the apertures 260, 261 are closed when the reservoir 5 is seated in the recess 265, but are opened when the reservoir 5 is lifted slightly from the bottom of the recess 265. An actuator 6 and a mechanical linkage 263 may be used to lift the reservoir 5. Alternatively, the reservoir 5 may be rotatable within the recess 265 to align the first and second apertures 260, 261.

The recess 265 is preferably arranged to one side of the spout 7, so as not to obstruct emptying of the heating chamber 4. Alternatively, the heating chamber 4 may be emptied through the recess 265, in which case the aperture 261 is preferably located towards the wall of the kettle body 3, and is somewhat larger than shown in Figure 26.

In an alternative, the reservoir 5 and recess 265 are located on the handle side of the kettle 1; this is a less preferred position for filling, but avoids obstruction of the spout 7. However, the reservoir 5 may be filled by means of a passage 101 as described above.

As an alternative to the recess 265, the reservoir 5 may be supported at its upper end against the lid 9 or a side wall of the kettle body 3. Means may then be provided within the kettle body to act as the valve, or to open a valve within the reservoir 5.

The reservoir 5 may be vertically elongate and the liquid level therein may be visible when the reservoir 5 is seated in the recess 265. The reservoir 5 and/or the recess 265 may be marked with one or more level indicators, allowing more precise level indication than is possible in the heating chamber, since the horizontal cross-section of the reservoir 5 is much less than that of the heating chamber 4.

Alternatively, the reservoir 5 may be shallow and located in the lid 9, in which the recess 265 is also formed. This arrangement facilitates manual lifting of the reservoir 5 within the recess 265, without the need for a mechanical linkage.

### Nineteenth Embodiment

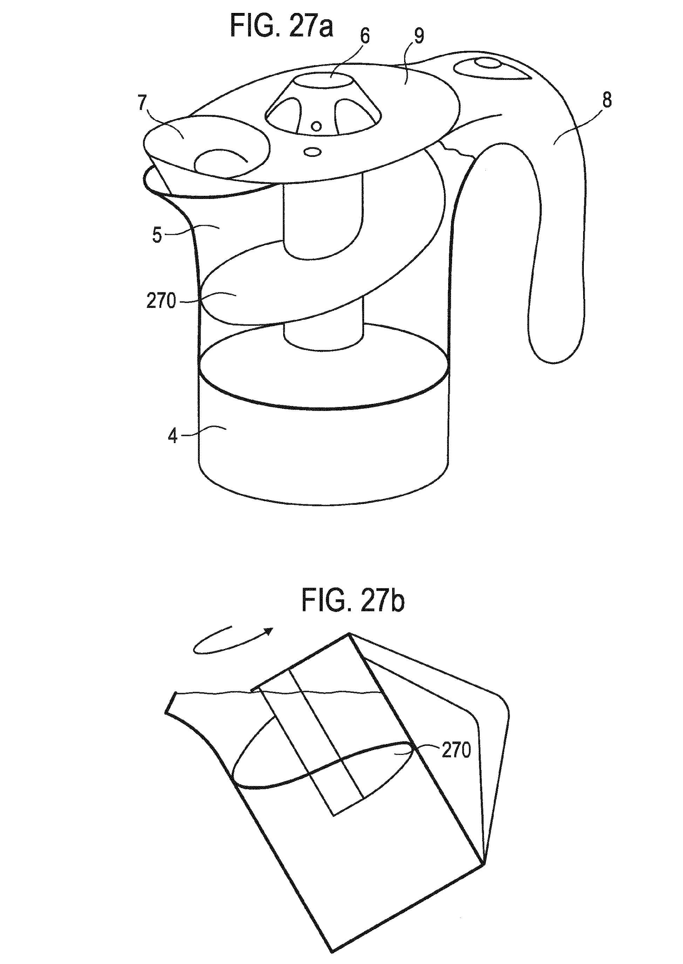

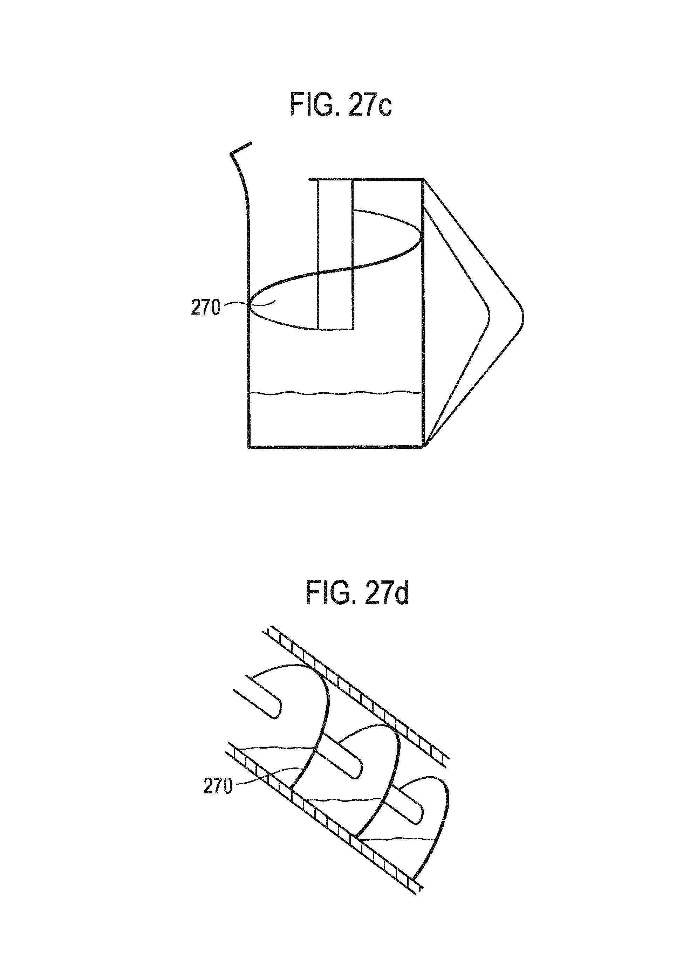

In the nineteenth embodiment, as shown in Figure 27a, the reservoir 5 is defined by an Archimedean screw 270 that seals against the internal wall of the kettle 1, or is provided within a separate housing. When the kettle 1 is tipped forward for filling, as shown in Figure 27b, the reservoir 5 is formed between the lower side of the screw 270 and the internal wall of the kettle 1. The screw 270 may have an upper wall, so that the volume of the reservoir may be determined by the rotational position of the screw 270, which is adjustable by a rotating knob 6. The knob 6 may be indexed against different positions marked on the lid 9, so that the user can select the required volume of the reservoir 5. When the kettle 1 is placed upright, as shown in Figure 27c, water flows down the screw 270 into the heating chamber 4.

In an alternative shown in Figure 27d, the screw 270 has multiple turns, and the user fills a number of turns corresponding to the desired volume of liquid, before placing the kettle upright. This arrangement provides a particularly visually attractive method of metering the liquid, involving no moving parts, since no rotation of the screw 270 is required. In another alternative, the screw 270 is replaced by a cascade comprising a plurality of discrete reservoir portions which are filled in turn.

### Twentieth Embodiment

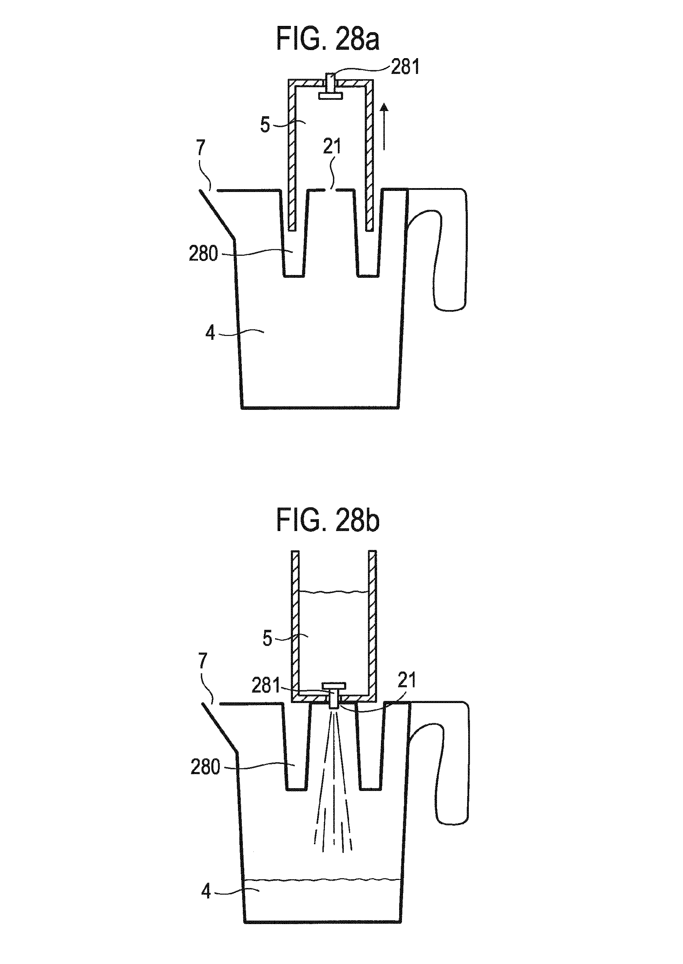

In the twentieth embodiment, as shown in Figures 28a and 28b, the reservoir 5 comprises a removable open receptacle storable in an inverted position within a correspondingly shaped recess 280 in the top of the kettle 1, and having a valve 281 in the bottom. The reservoir 5 can be removed as shown in Figure 28a, righted, and filled with the required volume of liquid, before being placed on top of the kettle 1 such that the valve 281 opens into a filling aperture 21 and liquid is dispensed into the heating chamber 4. A filter may be located under the filling aperture, in the space within the recess 280. Alternatively, the reservoir 5 may be emptied into the heating chamber 4 through the spout 7 of the kettle 1; in this case, the valve 281 and filling aperture 21 may be omitted, while retaining the benefit of storing the receptacle within the recess 280.

### Twenty-first Embodiment

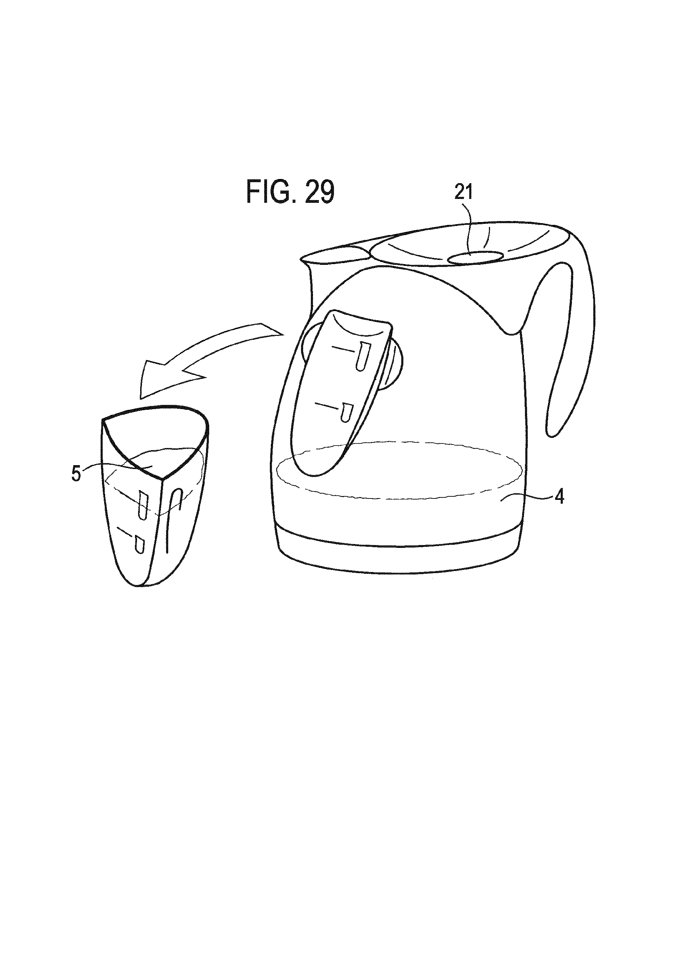

In the twenty-first embodiment, as shown in Figure 29, the reservoir 5 is a receptacle stored on the external wall of the kettle 1, and removable for filling as shown by the arrow in Figure 29. Alternatively, the reservoir 5 may also be stored on any part of the kettle, including the cordless base. The reservoir 5 may be at least partially translucent or transparent, and may include a level indicator, indicating filling levels for 1 and 2 cups, for example. The filling aperture 21 is arranged as a wide funnel, to facilitate filling.

### Twenty-second Embodiment

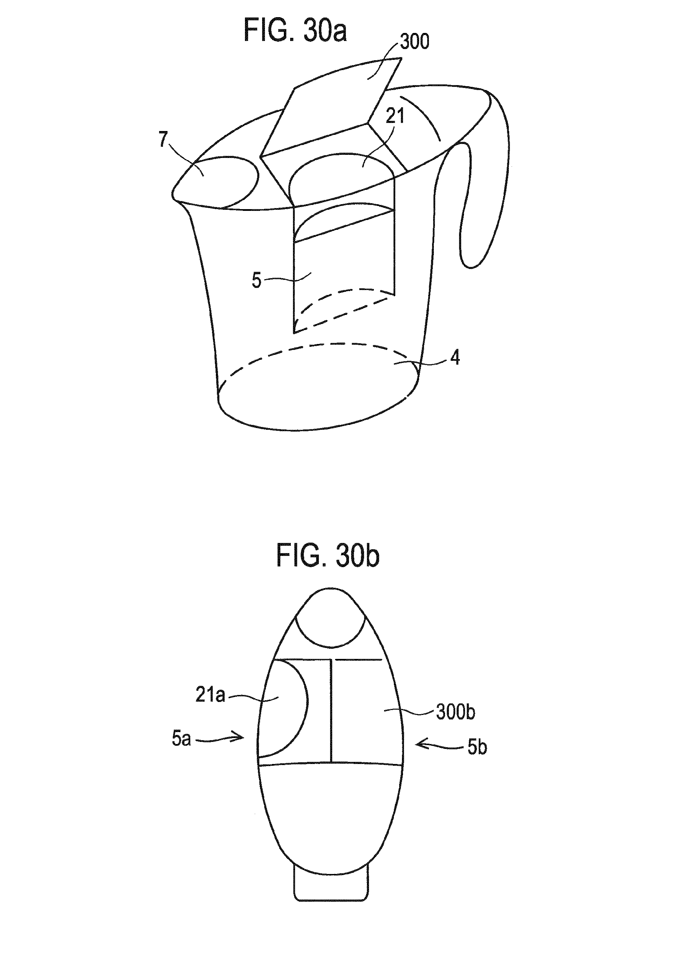

In the twenty-second embodiment, as shown in Figures 30a and 30b, the reservoir 5 comprises a compartment having a filling aperture 21 covered by a hinged cover 300. The reservoir 5 has a valve (not shown) at the bottom that is opened when the cover 300 is closed, by means of a mechanical linkage. Hence, the reservoir 5 may be filled by opening the cover 300, and emptied into the heating chamber 4 by closing the cover 300. The kettle 1 may also be filled through the spout 7 if metering is not required.

As shown in Figure 30b, there may be two reservoirs 5a and 5b on either side of the kettle 1, of differing capacities such as one and two cups, with corresponding covers 300a and 300b.

### Twenty-third Embodiment

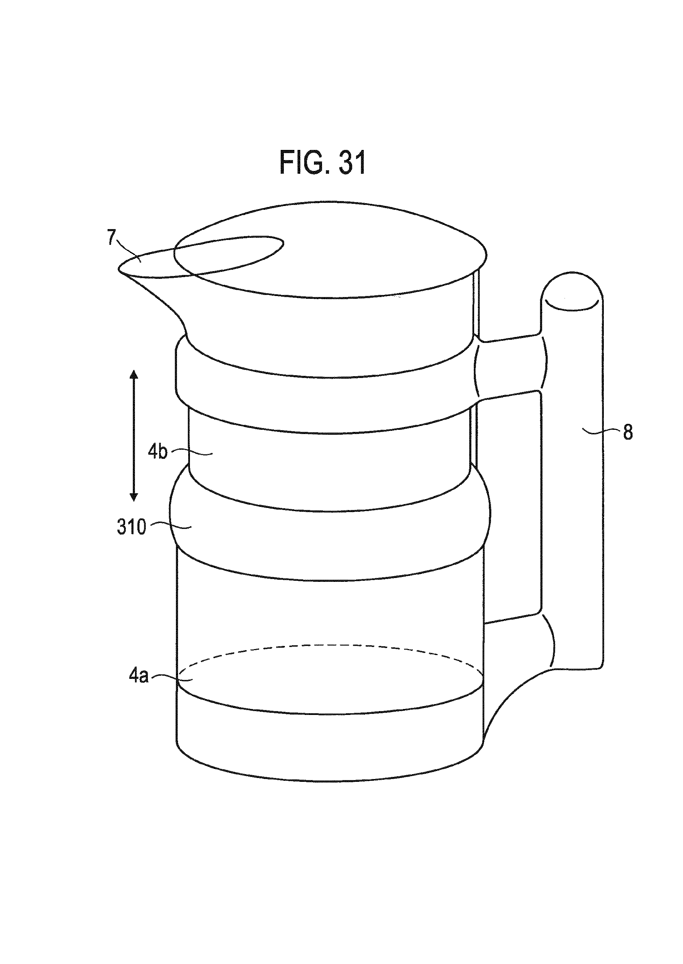

In the twenty-third embodiment, as shown in Figure 31, the kettle 1 comprises a lower heating chamber portion 4a and an upper heating chamber portion 4b, slidable substantially vertically with respect to the lower portion 4a, in telescopic fashion, so as to vary the volume of the heating chamber 4. A sliding seal 310 is provided between the walls of the lower and upper portions 4a, 4b, which are preferably made of glass or Perspex. The handle 8 is slidably attached around the upper portion 4b. In this way, the available volume of the heating chamber may be varied, for example from 0.5 1 to 1.5 1, to suit the intended use of the kettle 1.

### Temperature Indicator/Control

The kettle 1 may include a temperature indicator for indicating whether the water within the heating chamber 4 needs to be re-heated. For example, the temperature indicator may indicate whether the water is below a predetermined temperature, such as 80° C. Since water at or above 80° C is suitable for making coffee and certain types of tea, the user may then decide not to reheat the water but to dispense from the kettle 1 at the current temperature. This may avoid unnecessary reheating and therefore save energy.

The temperature indicator may comprise a thermochromic material that changes colour above the predetermined temperature.

Alternatively, the temperature indicator may comprise a thermometer, such as a mechanical, electric or electronic thermometer, that provides at least an approximate indication of the actual temperature of the water within the heating chamber 4.

Alternatively, the kettle 1 may include a thermal switch, that disconnects or reduces heating power when the water reaches a first temperature, such as boiling temperature, but resets when the water reaches a second, significantly lower temperature, such as 80° C. The second temperature may be adjustable by the user, or may be fixed during manufacture. The thermal switch therefore prevents the water from being reheated when it is above the second temperature. Preferably, the user can override the thermal switch, for example by manually resetting it, so that the water can be reheated when it is above the second temperature.

### Temperature Control

The kettle 1 may include a thermal switch that disconnects or reduces heating power shortly before the water reaches a desired temperature, such as boiling temperature. The thermal switch may determine when the heat within the heating element is sufficient to heat the water to the desired temperature after disconnection or reduction of the heating power, by virtue of the temperature gradient between the heating element and the water. In this way, the amount of energy required to heat to the desired temperature may be reduced; for example, 15-20 seconds of heating may be saved in a typical boiling operation.

### Thick Film Element

The majority of currently available 'under floor' elements are sheathed elements, in which a heating resistance wire is wound around a core and packed within a metal sheath that is bonded to the underside. Another type of under floor element is a thick film element, in which heating resistance tracks are printed onto an electrically insulating layer on the underside of the element. The inventors has found that thick film elements typically require 5-15% less energy than sheathed elements to boil a given volume of water. Hence, the above embodiments preferably include a thick film element so as further to reduce the energy requirements of the kettle 1.

### Alternative Embodiments

The above embodiments illustrate, but do not limit, the present invention. For example, the present invention is not limited to kettles, but may be applied to other domestic liquid heating vessels. Alternative embodiments which may occur to the skilled reader on reading the above description may also fall within the scope of the invention.

### Alternative Statements of Invention

Alternative aspects of the present invention are recited below as numbered clauses.
**1.** A liquid heating vessel comprising:
   a. a liquid reservoir;
   b. a heating chamber for heating liquid contained therein; and
   c. a user-actuable dispenser for dispensing liquid from the reservoir to the heating chamber;
      wherein the dispenser is arranged to dispense a predetermined volume of liquid in response to a user actuation thereof.
**2.** The liquid heating vessel of clause 1, wherein the dispenser comprises one or more compartments, wherein said user actuation dispenses liquid from one said compartment.
**3.** The liquid heating vessel of clause 1, wherein the dispenser comprises a plurality of said compartments, of mutually different capacities.
**4.** The liquid heating vessel of clause 3, wherein each of said compartments comprises a respective independent actuator.
**5.** The liquid heating vessel of clause 4, wherein at least one of said actuators comprises a cover for the corresponding said compartment, arranged to dispense liquid from the compartment when the cover is closed.
**6.** The liquid heating vessel of clause 2, wherein the dispenser comprises a compartment located between the reservoir and the heating chamber and arranged to dispense liquid contained within the compartment in response to the user actuation.
**7.** The liquid heating vessel of clause 6, wherein the compartment is refillable from the reservoir in response to a further user actuation.
**8.** The liquid heating vessel of clause 6, wherein the compartment is refillable from the reservoir following the user actuation.
**9.** The liquid heating vessel of any one of clauses 2 to 8, wherein the compartment is configurable to allow liquid to flow from the reservoir through the compartment to the heating chamber.
**10.** The liquid heating vessel of clause 2, wherein the dispenser comprises a plurality of compartments arranged within the reservoir, such that said user actuation causes liquid to be dispensed from one of the compartments.
**11.** The liquid heating vessel of clause 10, wherein a further said user actuation causes liquid to be dispensed from a different one of the compartments.
**12.** The liquid heating vessel of clause 1, wherein the dispenser comprises a pump.
**13.** A liquid heating vessel comprising:
   a. a liquid reservoir;
   b. a heating chamber for heating liquid contained therein; and
   c. a user-actuable dispenser for dispensing liquid from the reservoir to the heating chamber;
      wherein the dispenser is arranged to be inhibited when the heating chamber contains a predetermined quantity of liquid.
**14.** The liquid heating vessel of clause 13, including user operable means for adjusting the quantity of liquid at which the dispenser is arranged to be inhibited.
**15.** The liquid heating vessel of clause 13 or clause 14, wherein the dispenser includes a valve arranged to inhibit the dispensing when liquid within the heating chamber reaches a predetermined level.
**16.** A liquid heating vessel comprising:
   a. a liquid reservoir; and
   b. a heating chamber for receiving liquid from the reservoir and for heating the liquid;
      wherein the liquid reservoir has a variable capacity.
**17.** The liquid heating vessel of clause 16, wherein the capacity of the liquid reservoir is arranged to increase as the volume of liquid contained therein increases.
**18.** The liquid heating vessel of clause 16 or clause 17, wherein the liquid reservoir and the heating chamber together occupy a substantially constant volume within the liquid heating vessel, such that the volume of the heating chamber increases as the volume of the liquid reservoir decreases.
**19.** The liquid heating vessel of clause 16, wherein the reservoir has a floor that is moveable to vary the capacity of the reservoir.
**20.** The vessel of clause 19, wherein the floor is moveable by the user.
**21.** The vessel of clause 20, wherein the floor is moveable so as to dispense liquid from the reservoir into the heating chamber.
**22.** A liquid heating vessel comprising:
   a. a liquid reservoir; and
   b. a heating chamber for receiving liquid from the reservoir and for heating the liquid;
      wherein the liquid reservoir is arranged to become open to the heating chamber when the quantity of liquid in the heating chamber exceeds a predetermined level.
**23.** A liquid heating vessel comprising:
   a. a liquid reservoir; and
   b. a heating chamber for receiving liquid from the reservoir and for heating the liquid;
      wherein the liquid reservoir is formed within a lid of the liquid heating vessel.
**24.** A liquid heating vessel comprising:
   a. a liquid reservoir; and
   b. a heating chamber for receiving liquid from the reservoir and for heating the liquid;
      wherein the liquid reservoir is formed as a permanently open container.
**25.** A liquid heating vessel comprising:
   a. a liquid reservoir; and
   b. a heating chamber for receiving liquid from the reservoir and for heating the liquid;
      wherein the heating chamber includes an indicator for indicating when the quantity of liquid within the heating chamber reaches a predetermined threshold, said threshold being adjustable by the user.
**26.** A liquid heating vessel including a temperature indicator for indicating to the user whether liquid contained therein is above a predetermined temperature as said liquid cools.
**27.** A liquid heating vessel arranged to heat liquid to a first predetermined temperature and to inhibit reheating of the liquid when above a second temperature substantially lower than the first temperature.
**28.** The liquid heating vessel of clause 27, wherein the second temperature is adjustable by the user.
**29.** A liquid heating vessel comprising:
   a. a liquid reservoir; and
   b. a heating chamber for receiving liquid from the reservoir and for heating the liquid;
      wherein the reservoir is arranged to dispense liquid into the heating chamber when the reservoir is rotated about a substantially horizontal axis.
**30.** The vessel of clause 29, wherein the reservoir is substantially fixed relative to the vessel, such that rotation of the vessel causes said rotation of the reservoir and thereby dispenses liquid into the heating chamber.
**31.** The vessel of clause 29, wherein the reservoir is pivotably mounted about said axis to the vessel so as to dispense liquid into the heating chamber.
**32.** The vessel of clause 31, wherein the reservoir is biased towards an upright position and is rotatable about said axis by the weight of liquid contained therein so as to dispense the liquid into the heating chamber.
**33.** The vessel of clause 31, wherein the reservoir is pivotable externally of the main body of the vessel, so as to dispense liquid through a filling aperture into the heating chamber.
**34.** The vessel of clause 33, wherein the reservoir is pivotable so as substantially to cover the filling aperture.
**35.** The vessel of clause 29, wherein the reservoir is formed by an Archimedean screw arranged to dispense the liquid into the heating chamber when rotated about said axis.
**36.** The vessel of clause 35, wherein the capacity of the reservoir is variable by rotation of the screw about the axis of the screw.
**37.** The vessel of clause 35, wherein the screw has a plurality of turns each forming a portion of the reservoir, such that one or more of the portions is fillable in turn.
**38.** The vessel of clause 29, wherein the reservoir is formed of a cascade comprising a plurality of reservoir portions fillable in turn.
**39.** The vessel of any one of clauses 29 to 31, wherein an aperture is provided at or around an upper part of the reservoir, such that liquid flows from the reservoir through the aperture into the heating chamber when the reservoir is rotated about said axis.
**40.** The vessel of any one of clauses 29 to 39, including a flow meter arranged to determine the quantity of liquid dispensed from the reservoir.
**41.** A liquid heating vessel comprising:
   a. a liquid reservoir having a liquid inlet;
   b. a heating chamber for receiving liquid from the reservoir and for heating the liquid; and
   c. an outlet for dispensing the liquid from the heating chamber when the vessel is tilted towards the outlet;
      wherein the liquid inlet is open and arranged substantially to prevent escape of liquid from the reservoir when liquid is dispensed through the outlet.
**42.** The vessel of clause 41, wherein the liquid inlet is arranged in an upper portion of the vessel, displaced from the central axis of the vessel in a direction away from the outlet.
**43.** The vessel of clause 41, wherein the liquid inlet comprises a passage located substantially above the reservoir, extending from an inlet entrance aperture, displaced from the substantially vertical central axis of the vessel in a direction towards the outlet, to an inlet exit aperture, displaced from the central axis of the vessel in a direction away from the outlet.
**44.** The vessel of clause 43, including a user actuable valve for dispensing liquid from the reservoir into the heating chamber.
**45.** The vessel of clause 44, including a valve actuator disposed beyond the inlet exit aperture in a direction away from the outlet.
**46.** The vessel of clause 45, wherein the valve actuator is disposed outside the reservoir.
**47.** The vessel of clause 45, wherein the valve actuator is disposed within the reservoir.
**48.** The vessel of clause 43, including a pump for dispensing liquid from the reservoir.
**49.** A liquid heating vessel comprising:
   a. a liquid reservoir having a liquid inlet and a cover for the liquid inlet; and
   b. a heating chamber for heating the liquid;
      wherein the liquid reservoir includes a valve arranged to dispense liquid into the heating chamber when the cover is closed.
**50.** The liquid heating vessel of any preceding clause, wherein the reservoir is removable from the liquid heating vessel.
**51.** The liquid heating vessel of clause 50, wherein the reservoir includes a valve arranged to prevent leakage of liquid from the reservoir when removed from the liquid heating vessel.
**52.** The liquid heating vessel of any preceding clause, wherein the reservoir includes a liquid filter.
**53.** A liquid heating vessel having a reservoir removably stored on or in the outer surface of the vessel, the vessel being at least partially fillable from the reservoir.
**54.** The vessel of clause 53, wherein the reservoir is detachably storable in a recess in a side wall of the vessel.
**55.** The vessel of clause 53, wherein the reservoir is detachably storable in a recess in an upper surface of the vessel.
**56.** The vessel of clause 54 or 55, wherein the vessel has a filling inlet and the reservoir has a valve arranged to open when placed against the filling inlet.
**57.** The vessel of clause 54 or 55, wherein the reservoir and the recess are arranged such that liquid is released from the reservoir into the vessel dependent on the position of the reservoir within the recess.
**58.** The vessel of any preceding clause, wherein the reservoir is arranged above the heating chamber so as to avoid contact with liquid within the heating chamber.
**59.** The reservoir of any preceding clause.
**60.** A liquid heating vessel having a liquid inlet, a heating chamber, and a flow meter disposed therebetween so as to determine the quantity of liquid entering the heating chamber.
**61.** The vessel of clause 60, including a reservoir disposed between the inlet and the flow meter and arranged to dispense liquid into the heating chamber when rotated about a substantially horizontal axis.
**62.** The vessel of clause 61, wherein the flow meter includes a display having an offset corresponding to the liquid capacity of the reservoir.
**63.** A liquid heating vessel comprising a liquid inlet and a heating chamber for receiving liquid from the inlet, the heating chamber having a variable liquid capacity.
**64.** The vessel of clause 63, including means arranged to restrict the liquid capacity of the heating chamber.
**65.** The vessel of clause 64, wherein the means arranged to restrict the liquid capacity of the heating chamber comprises a moveable partition.
**66.** The vessel of clause 65, wherein the inlet is arranged to open into a lower part of the heating chamber, and the partition is substantially vertically moveable above the lower part of the heating chamber.
**67.** The vessel of clause 65, wherein the partition is movable substantially horizontally towards and away from the inlet.
**68.** The vessel of clause 67, wherein the partition is pivotable about a substantially vertical axis.
**69.** The vessel of any one of clauses 63 to 68, wherein the restricted liquid capacity is variable by the user.
**70.** The vessel of clause 64, wherein the means arranged to restrict the liquid capacity of the heating chamber comprises an air chamber having an inlet at its lower end and a valve at its upper end, such that air is retained in the chamber when the valve is closed, thereby excluding liquid from the chamber, and the liquid is permitted to enter the chamber when the valve is open.
**71.** The vessel of clause 70, wherein the valve is user-actuable.
**72.** The vessel of clause 70 or 71, wherein the volume of the air chamber is variable.
**73.** The vessel of clause 64, wherein the means arranged to restrict the liquid capacity of the heating chamber comprises one or more liquid-impermeable objects.
**74.** The vessel of clause 73, wherein the means arranged to restrict the liquid capacity of the heating chamber comprises a set of liquid-impermeable objects of different sizes, one or more of which may occupy space within the heating chamber at any one time.
**75.** The vessel of any one of clauses 63 to 74, wherein the means arranged to restrict the liquid capacity is selectively actuable so as to restrict or substantially not restrict the liquid capacity.
**76.** The vessel of clause 75, wherein the means arranged to restrict the liquid capacity is coupled to means for heating the heating chamber, so as to inhibit heating of the heating chamber while said liquid capacity is restricted.
**77.** The vessel of clause 75 or 76, including a first liquid level indicator arranged to indicate the liquid level in the heating chamber when the liquid capacity thereof is restricted, and a second liquid level indicator arranged to indicate the liquid level in the heating chamber when the liquid capacity thereof is substantially not restricted.
**78.** The vessel of clause 63, wherein the heating chamber is of variable volume.
**79.** The vessel of clause 78, wherein the heating chamber comprises first and second portions slideable relative to each other so as to vary the volume of the heating chamber.
**80.** A liquid heating vessel having a liquid level indicator arranged to rotate relative to the body of the vessel about a substantially horizontal axis.
**81.** The vessel of clause 80, wherein the indicator is arranged to rotate so as to remain substantially level as the vessel is tilted.
**82.** A liquid heating vessel having a liquid level indicator slidably mounted relative to the body of the vessel.
**83.** The liquid heating vessel of any one of clauses 1 to 57 and 60 to 82, having a thick film heating element.
**84.** The liquid heating vessel of any one of clauses 1 to 57 and 60 to 83, having a cordless power base.

## Claims

1. A liquid heating vessel comprising:
a. a liquid reservoir having a liquid inlet;
b. a heating chamber for receiving liquid from the reservoir and for heating the liquid; and
c. an outlet for dispensing the liquid from the heating chamber when the vessel is tilted towards the outlet;
wherein the liquid inlet is open and arranged substantially to prevent escape of liquid from the reservoir when liquid is dispensed through the outlet.

2. The vessel of claim 1, wherein the liquid inlet is arranged in an upper portion of the vessel, displaced from the substantially vertical central axis of the vessel in a direction away from the outlet.

3. The vessel of claim 1, wherein the liquid inlet comprises a passage extending from an inlet entrance aperture, displaced from the substantially vertical central axis of the vessel in a direction towards the outlet, to empty into the reservoir at a location displaced from the central axis of the vessel in a direction away from the outlet.

4. The vessel of any preceding claim, including a user actuable valve for dispensing liquid from the reservoir into the heating chamber.

5. The vessel of claim 4, including a valve actuator disposed in a direction away from the outlet.

6. The vessel of claim 5, wherein the valve actuator is positioned towards a handle of the liquid heating vessel, so as to allow one-handed operation of the actuator while holding the handle.

7. The vessel of claim 5 or 6, wherein the valve actuator is disposed outside the reservoir.

8. The vessel of claim 5 or 6, wherein the valve actuator is disposed within the reservoir.

9. The vessel of any one of claims 1 to 3, including a valve for dispensing liquid from the reservoir into the heating chamber, the valve being arranged to inhibit dispensing of liquid from the reservoir when the liquid in the heating chamber reaches a predetermined level.

10. The liquid heating vessel of claim 9, wherein the valve is a float valve.

11. The liquid heating vessel of claim 10, wherein the float valve comprises a ball arranged to float to the liquid level in the heating chamber and to block the passage of liquid from the reservoir into the heating chamber when the liquid level reaches the predetermined level.

12. The liquid heating vessel of any preceding claim, including a mechanism for preventing liquid from flowing into the heating chamber from the reservoir as liquid is dispensed from the heating chamber.

13. The liquid heating vessel of any preceding claim, wherein the liquid reservoir is removable from the vessel so as to allow filling of the reservoir with liquid separately from the vessel.

14. The liquid heating vessel of any previous claim, wherein the reservoir is integrated with the lid.

15. The liquid heating vessel of any preceding claim, wherein the reservoir is vertically elongate and disposed away from the outlet.
